# EUROPEAN PATENT SPECIFICATION

(11) **EP 3 026 515 B1**
(45) Date of publication and mention of the grant of the patent: **07.04.2021**
(21) Application number: 14883915.2
(22) Date of filing: 27.02.2014
(51) Int. Cl.: G05B 19/05, G05B 19/418, G06F 13/40, H04J 3/06

(54) **PROGRAMMABLE CONTROLLER SYSTEM**
PROGRAMMIERBARES STEUERUNGSSYSTEM
SYSTÈME D'AUTOMATE PROGRAMMABLE

(43) Date of publication of application: 01.06.2016
(73) Proprietor: Fuji Electric Co., Ltd., Kawasaki-shi, Kanagawa 210-9530 (JP)
(72) Inventor: YUO, Yukiteru, Kawasaki-shi, Kanagawa 210-9530 (JP)
(74) Representative: MERH-IP Matias Erny Reichl Hoffmann Patentanwälte PartG mbB
(86) International application number: PCT/JP2014/054831
(87) International publication number: WO 2015/128981

(56) References cited:
- JP-A- H09 135 260
- JP-A- 2009 059 373
- JP-A- 2012 068 856
- US-A- 5 988 846
- US-A1- 2008 195 882
- US-A1- 2010 049 891
- US-A1- 2011 264 241
- NAOKI NYUI ET AL.: 'MICREX-SX SPH3000 MG ' with Built-in High-Speed and Large-Capacity Network' FUJI ELECTRIC JOURNAL vol. 86, no. 3, 30 September 2013, pages 225 - 227, XP008182242

## Description

### Technical Field

The present invention is related to a programmable controller system.

### Background Art

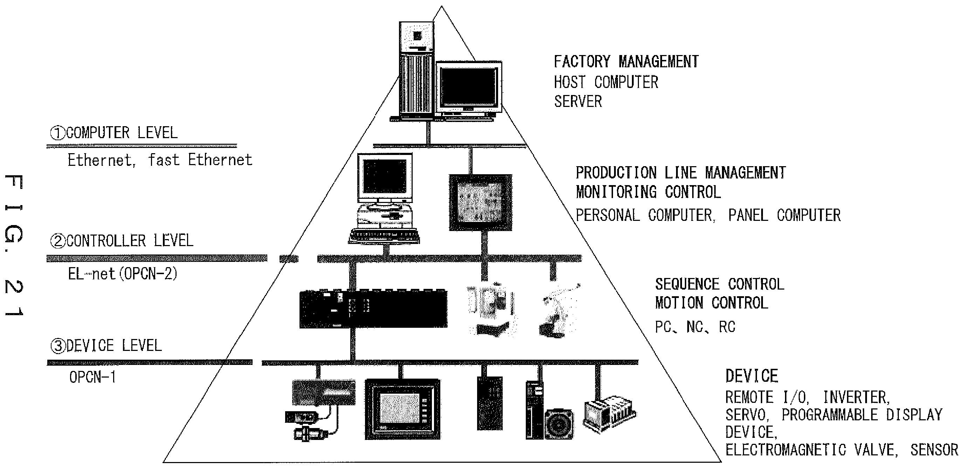

Control systems of recent years, accompanying the increase in the scale thereof, sometimes adopt a multi-configuration structure (multi-configuration control system) in which a plurality of controllers are connected via a network so as to be arranged distributedly. As an example of such a structure, the system schematically shown in FIG. 21 for example is known.

FIG. 21 is a schematic view of a multi-configuration control system as described above.

A control system includes, as its main components, a server or a host computer, a monitoring control personal computer, a sequence controller, an IO module/inverter, etc., in the order from the top stage, and these components are connected via a computer-level network, a controller-level network and a device-level network respectively.

In the example of the programmable controller system shown in FIG. 21, a network of a computer level that conducts production management/instruction, etc., a network of a controller level that connects controllers of processing machines, etc., and a network of a device level that connects each device (I/O) to each controller are provided. By connecting these networks in a hierarchical manner, integrated monitoring control is realized.

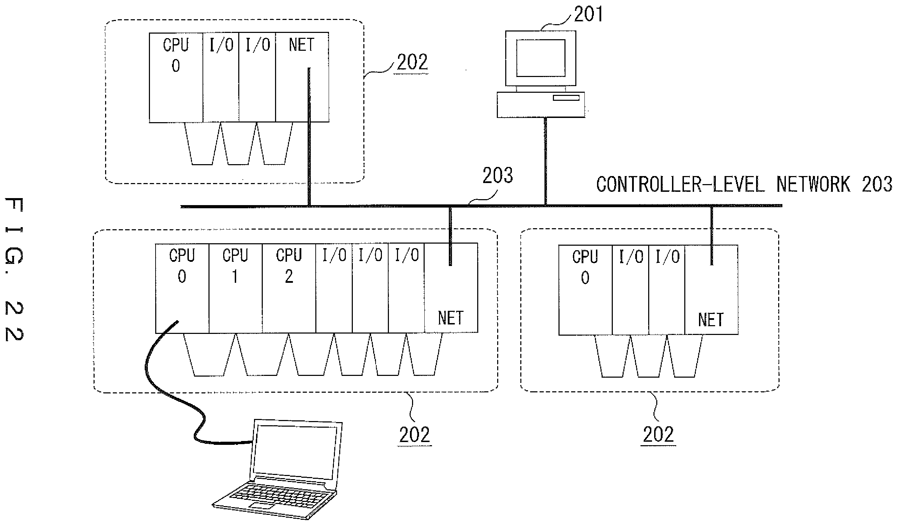

FIG. 22 shows a structural example of a conventional system in which attention is paid to the controller level network.

In a large-scale system, sector control of control application software based on a plurality of controllers is conducted in view of the complexity of the system processes and the physical arrangements and in view of other factors. Each unit of control is referred to as a configuration 202 (the portions enclosed by the dashed lines in the figure), and the entire control is conducted by a system structure in which the plurality of configurations 202 are connected by a controller-level network 203. It is common for a server 201 etc. to be connected to the controller-level network 203 in order to conduct the monitoring control and the production management of the entire system.

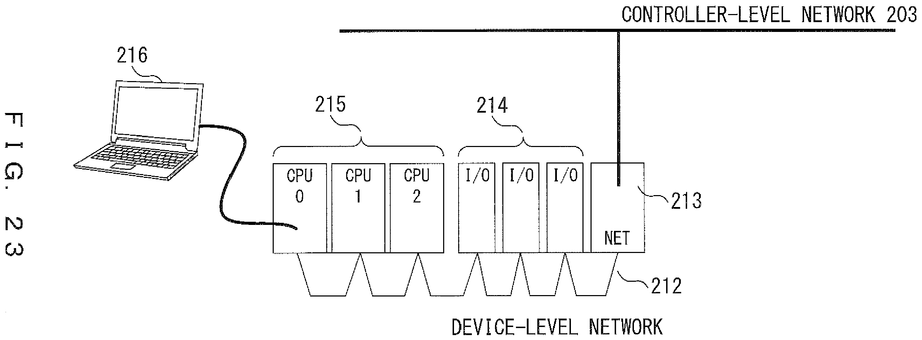

The structure of each configuration 202 includes, as shown in FIG. 23 for example, a CPU module 215 that executes control application software, an I/O module 214 that conducts input and output to and from a control target device, a communication module 213 that conducts communications in the controller-level network 203, etc.

The above respective modules 213, 214 and 215 are connected to a device-level network 212 so that communications are possible to each other via the device-level network 212.

Note that it is also possible to employ, in addition to the above example, a structure in which each module is mounted on a board having a shape of for example a base board so that data exchange is conducted between the modules via the bus on the board. It is also possible to employ a structure in which the CPU module 215 is connected to a higher-stage support tool 216.

In each configuration 202, for example the higher-stage support tool 216 controls and monitors, by using a monitor device, the downloading of control application software, the activation/halting of the control application software, etc., for the CPU module 215.

Regarding the above device-level network such as a high-speed device-level network used for motion control for example, a function of synchronizing input/output timings of slave devices is known. For example, the present application proposed a timing synchronization method in a device-level network (Patent Document 1).

FIG. 24 shows a process timing example of a device-level network in Patent Document 1.

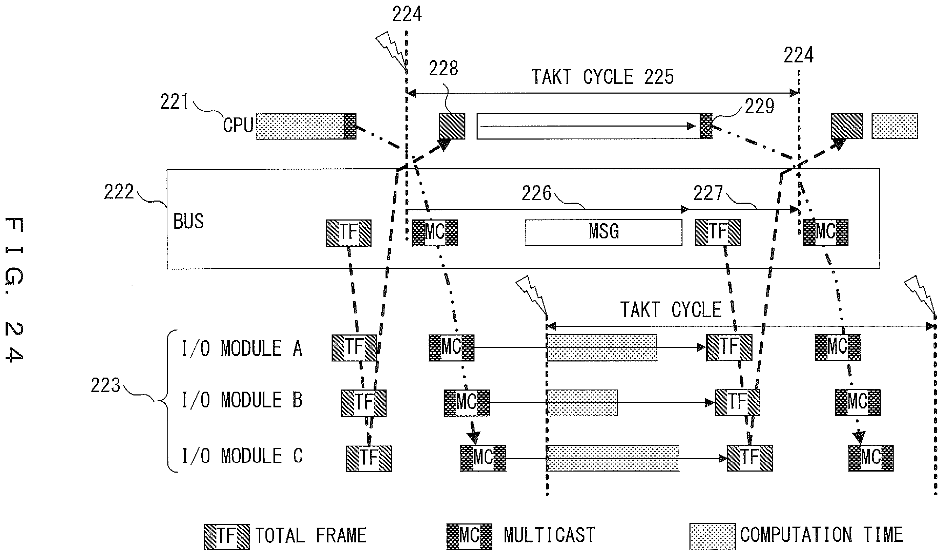

In FIG. 24, numerals 221 denote timings of application software computation conducted by a CPU module, numeral 222 denotes a data frame on the bus output from the CPU module, and numeral 223 denotes the data processing timings in the I/O module.

Note that slave modules are connected via cables in actuality, which causes shifts the data obtainment timings of MC frame; however, this is omitted.

The process of each module related to communications in the device-level network is performed/managed in a prescribed cycle (referred to as a takt cycle).

This is caused by a cyclic interrupt that is called takt interrupt in a CPU module . In a CPU module, the application software computation is started by the above takt interrupt. A structure is employed in which a takt interrupt occurs when the transfer of input data (TF (total frame)) has been completed.

Note that a TF frame is transmitted by a CPU module to a device-level network at a cyclic interrupt of a timing calculated in advance in accordance with the types and the number of I/O modules that constitute the system. This cyclic interrupt occurs at a timing when a prescribed time denoted by 226 has elapsed since for example a takt interrupt occurrence timing (takt cycle start timing) 224.

The above TF frame circulates through the respective I/O modules, arbitrary data is added to the frame in each I/O module, and the frame is stored in a reception buffer etc. (not shown) after returning to the CPU module as the final stage, as shown in the figure. This makes it possible for the CPU module to obtain data of each I/O module (inputting of the latest data) . A point in time when the reception of this TF frame has been completed is the above transfer completion time. Then, the CPU will obtain the above latest data from the reception buffer as input data 228 shown in the figure.

The CPU module conducts a prescribed application software computation on the basis of the above input data 228 so as to generate output data 229. The output data 229 is stored in a transmission buffer (not shown) as MC data. The stored MC data is distributed to each I/O module at the next takt interrupt occurrence timing.

Note that a CPU module includes for example a CPU that conducts the above application software computation, a processor that stores/transmits data of the above transmission buffer and the reception buffer, etc., although this is not illustrated.

Also note that the takt cycle in the CPU module and the takt cycle in each I/O module have different timings, as shown in FIG. 24, while this means that they have different phases but have the same length (for example 1ms). Because it is necessary to synchronize the takt cycle start timings in all I/O modules, a different "delay time" is set in each I/O module. A timing when a "delay time" has elapsed after the reception of a TF frame or after the reception of a MC frame is set as a takt cycle start timing for each I/O module. Thereby, it is possible to synchronize the takt cycle start timings in all I/O modules as shown in the figure. Note that the "delay time" is set for each I/O module in advance by the CPU module on the basis of communications with each I/O module.

From what is described above, when the timing of a takt cycle in a CPU module is changed, the timing of the transmission of a TF frame or a MC frame changes, and thereby the takt cycle in each I/O module also changes.

Also, it is also possible to consider that a CPU module has two types of takt cycles, although this is not explicitly shown in FIG. 24. Specifically, they are a takt cycle 225 in the column denoted by numeral 221 and a takt cycle (not shown) related to the transmission and reception of data on the bus in the column denoted by numeral 222. The takt cycle that is not shown is time divided into a time range in which the depicted TF frame circulates, into a time range in which the depicted MC frame is distributed to each I/O module, and into the depicted MSG band (time range of an arbitrary one-to-one transmission/reception of a message). In other words, for each takt cycle, the above processes are conducted in the order of the depicted TF, MC, and MSG.

Note that the takt cycle 225 in the column denoted by numeral 221 is related to prescribed computation conducted by a CPU etc., and can also be called "application software computation cycle" etc. The above takt cycle that is not shown is herein referred to as a "bus/takt cycle" etc.

Here, the controller-level network exchanges data at a speed lower than in the device-level network and there has not been a network having a function of synchronizing control cycles.

Accordingly, the present applicant has proposed a function of synchronizing the processing timings between controllers for a controller-level network in a former application (PCT/JP2013/050121).

Also, in a multi-configuration control system as described above, each of the distributed controllers collects pieces of data of control devices (I/O data) in a different cycle (at timings different between stations). Pieces of I/O data collected by these controllers are further collected to a host computer, etc., while each piece of collected I/O data is not in temporal sequence. In other words, conventional control systems cannot secure the synchronism of pieces of I/O data collected to a host computer.

Regarding this problem, the following method has conventionally been employed when it is assumed that there are first and second controllers as the above controllers.

If the application software execution cycle of the first controller is 10ms and the application software execution cycle of the second controller is 18ms, the data refresh cycle of the control-level network was 20ms.

As described above, the data refresh cycle between inter-controller networks was set in accordance with the execution cycle of the slowest application software. Accordingly, for pieces of I/O data collected to a host computer, only synchronism that some change occurred during the period of 20ms is secured, and the accuracy of the synchronism of the state changes of I/O data was low. In other words, the synchronism accuracy of respective pieces of data collected to a host computer was dependent on the data refresh cycle of the controller-level network.

Large-scale control systems of recent years such as ones for metal rolling processing, etc., collect actual measured values of a control parameter of the roller, the rotation speed of the roller, the pressure, etc., and measured analog values of a device connected to the device-level network such as the temperature of the target to be rolled, the thickness of a plate, etc. It is required to conduct appropriate preventive maintenance of various devices by tuning the parameters for improving the product quality and obtaining the changes in the measured data through the analysis of the collected pieces of data.

In the above conventional control systems, because the accuracy of the synchronism of pieces of the I/O data collected to the host computer is low, there were limitations on the accuracy of the tuning of the on-site devices and the promotion of the preventive maintenance.

The conventional controller system data collection device was required to collect asynchronously pieces of controller-level control data, which is exchanged on a controller-level network at a relatively low speed, or to connect a data collection network that is different from the control network to an I/O module etc. that is to be the data collection target and collect data independently (Patent Document 2).

FIG. 25 shows a structure example for a case when Patent Document 2 is applied to the structure shown in FIG. 22.

As shown in the figure, it is necessary to construct a data collection network 204 in addition to the existing controller-level network 203. To the data collection network 204, each I/O module 214, a server apparatus 205, etc., are connected so that the server apparatus 205 can collect data of each I/O module 214 via the data collection network 204.

However, this structure increases the costs of the system construction, tests for communication confirmation, etc., in addition to the costs of the addition of a communication interface to each I/O module 214 and the costs of components such as data collection cables etc. There is also a risk of failures caused by wrong wiring. In a system for metal rolling particularly, several tens through several hundreds of inverters for operating the roller are sometimes installed for one system, and these costs and risks impose large burdens on the user who uses the controllers to construct a system.

Also, there are no causal relationships between the controller-level network 203 and the data collection network 204 regarding controlling, making it difficult to associate respective pieces of collected data highly accurately.

Next, a case is discussed in which the above data collection network is not used but the existing controller-level network 203 is used so as to exchange control data and pieces of data collected from respective devices on the device level.

In such a case, because the module shapes and the cables are the same as those of the existing system, the problem of the increasing costs occurring in Patent Document 2 does not arise.

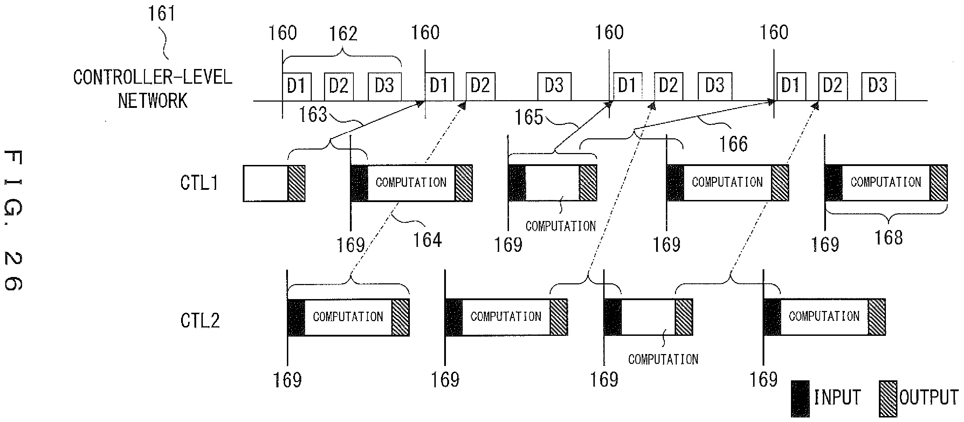

FIG. 26 shows a data collection timing chart that uses the existing controller-level network (common memory network) in a case when each controller is assumed to transmit the latest device-level data to the controller-level network.

In FIG. 26, the upper line of the figure shows transmission data D1, D2, D3 from each controller in a common memory controller-level network. In the depicted example, controller CTL1 transmits transmission data D1 and controller CTL2 transmits data D2. Note that a prescribed data transmission timing (a delay time from a controller cycle start timing 160) is set in advance for each controller. In other words, for example controller CTL1 transmits transmission data D1 at a timing denoted by "D1" and controller CTL2 transmits transmission data D2 at a timing denoted by "D2" in the figure.

Note that in the case of FL-net, which is known as an example of a common memory controller-level network, the transmission right (token, not shown) is circulated between stations, and a station having the token transmits the data of the station. The data transmission timing is dependent upon the process load states of each station, and accordingly it is general that the data transmission cycles are not variable.

In the middle and lower lines in FIG. 26, the computation states of controllers CTL1 and CTL2 are shown. As shown in the figure, the computation process of each controller is conducted in the order of input, computation, and output for each takt cycle. Note that in "input" in the figure, input data 228 is input, and in "output" shown in the figure, output data 229 is output.

Also, in the present example, the latest input/output data at a current point in time is always transmitted as transmission data D1 and D2 to for example the controller-level network.

Here, the above computation is a computation related to the device-level network, and the above input is data etc. of an I/O module input via the device-level network. The input process is performed at each takt cycle start timing 169 as shown in the figure, whereas controllers CTL1 and CTL2 often have different takt cycle start timings 169.

Also, because synchronization is not secured in each configuration in existing controller-level networks, there are no causal relationships between the timings of executing control application software of CTL1 and CTL2, resulting in a data collection timing error equivalent to "control cycle of the controller-level network + α" at the maximum in spite of the fact that pieces of the data are collected in one controller-level network. Further, because the application loads change the control cycle of the controller-level network, the above maximum collection error is not determined to be a unique value.

A method and device for synchronizing cycle time of a plurality of TTCAN buses based on determined global time deviations and a corresponding bus system are known from Patent Document 3, wherein there being cycle times of the basic cycles in the TTCAN buses, a global time being determined in each TTCAN bus and the deviations of the global times of the TTCAN buses which are linked together by at least one user being determined from the global times, and the deviations of the individual global times being transmitted to at least one bus user, the cycle times of the TTCAN buses, which are connected by at least one user, being mutually adjusted as a function of the deviations in the global times in such a way that the buses are synchronized with respect to the cycle times.

A method and device for synchronizing two bus systems and arrangement composed to two bus systems are known from Patent Document 4, wherein time control is effected by reference messages

A programmable controller system according to the preamble of claim 1 is known from Patent Document 5.
Patent Document 1: Japanese Laid-open Patent Publication No. 2012-68856
Patent Document 2: Japanese Laid-open Patent Publication No. 6-301617
Patent Document 3: US Patent Application US 2008/195882 A1
Patent Document 4: US Patent Application US 2010/049891 A1
Patent Document 5: US 5988846 A

### Disclosure of the Invention

When a function of adjusting timings in both the device-level network and the controller-level network above is to be realized, it is necessary to conduct the timing adjustment of the controller-level network, which is in a higher stage as a position of a network, and thereafter to conduct the timing adjustment of the device-level network on the basis of the adjusted timing.

However, the cycle of the controller-level network is usually longer than the control cycle of the device-level network, leading to a greater correction of the control cycle, and accordingly when the timing correction for the controller-level network is applied to the device-level network as it is, the control cycle in the device-level network is disturbed, leading to omission in data conversion etc.

When for example the device-level network is operated at 1ms and the controller-level network is operated at 10ms, the correction is 50 percent in the device-level network even when the correction width on the controller level is 5 percent, i.e., 0.5ms, which results in a problem of broken data or process omission.

In a device-level network, exchanged data thereof is used for controlling the input/output device or drive control devices such as inverters or servo devices, which leads to a problem that data omission or abnormality occurring at each time of timing correction prevents correct control of the system.

It is an object of the present invention to provide a programmable controller system, that can synchronize the timings of an entire programmable controller system that has a plurality of control units each provided with one controller and a plurality of input/output targets, the one controller and the plurality of input/output targets of each control unit being connected to a respective one of second networks, each of the controllers being connected also to a first network.

As a premise, the programmable controller system according to the present invention has a structure having a plurality of control units each provided with one controller and a plurality of input/output targets, the one controller and the plurality of input/output targets being connected to a certain one of second networks, each of the controllers being also connected to a first network. Further, each controller conducts an operation of computation and communication in accordance with a first cycle related to the first network and a respective second cycle related to the respective second network. This structure has the following features.

A specific controller from among the plurality of controllers includes a first cycle generation unit that determines a first cycle start timing of the controller on the basis of a second cycle start timing of the controller

Each of the controllers other than the specific controller includes the following units.

A first cycle synchronization unit that synchronizes the first cycle start timing of itself with a first cycle start timing of the first specific controller.

A second cycle correction unit that corrects the second cycle start timing of itself on the basis of the first cycle start timing of itself.

### Brief Description of the Drawings

FIG. 1 shows a structure of a programmable controller system according to the present example;
FIG. 2 shows a structure of a CPU module;
FIG. 3 shows a specific example of a synchronization method according to the present method;
FIG. 4 (a) and FIG. 4 (b) show examples of takt cycle start timings and shift amounts in the master station and a slave station;
FIG. 5 shows an example of a structure of a timer control unit;
FIG. 6 shows a register interface example of various types of signals related to the timer control unit shown in FIG. 5;
FIG. 7 shows a timing chart of various types of signals related to a correction value generation unit;
FIG. 8(a) and FIG. 8(c) explain an upper limit value of correction;
FIG. 9 shows examples of cycle start timing control in a controller-level network and a device-level network;
FIG. 10 shows an operation example in a case when a shift amount is corrected at one time in accordance with the example shown in FIG. 9;
FIG. 11 shows an operation example in a case when the present method is applied to the example shown in FIG. 10;
FIG. 12 shows an operation example of a situation after the correction completion related to FIG. 11;
FIG. 13 shows a data collection operation example in example 2;
FIG. 14 shows frame format examples of a TC frame and a data frame;
FIG. 15 shows a data structure example of a data frame used in a variation example of example 2;
FIG. 16 shows a data collection operation example in a variation example of example 2;
FIG. 17 is a functional block diagram of a programmable controller system of the present example;
FIG. 18 explains the controller network synchronization process of a former application(first);
FIG. 19 explains the controller network synchronization process of a former application(second);
FIG. 20 explains the controller network synchronization process of a former application(third);
FIG. 21 is a schematic view of an existing multi-configuration control system;
FIG. 22 shows an existing system structure example with attention being paid to the controller-level network;
FIG. 23 shows a detailed structural example of the configuration shown in FIG. 22;
FIG. 24 shows a process timing example of the device-level network in Patent Document 1;
FIG. 25 shows a structural example of a case where Patent Document 2 is applied to the structure shown in FIG. 22; and
FIG. 26 shows an existing data collection operation example.

### Description of the Preferred Embodiments

Hereinafter, the embodiments of the present invention will be explained by referring to the drawings.

Note that a programmable controller system according to the present example is a programmable controller system that includes a plurality of the above "configurations" in which controllers (CPU modules) and each I/O device are connected to a device-level network and that has a structure in which each controller is connected to the controller-level network. This method is related to the synchronization of the cycle start timings of respective configurations in a system of for example the above multi-configuration structure.

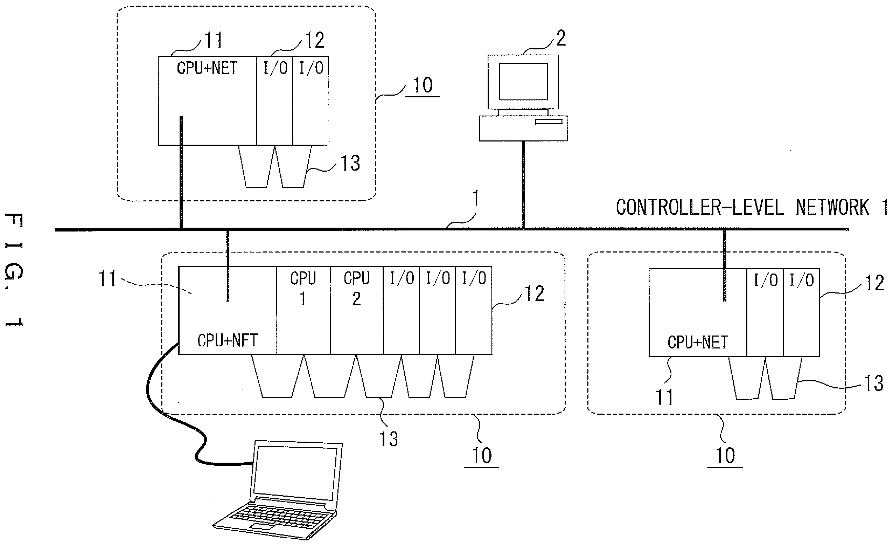

FIG. 1 shows a structure of a programmable controller system according to the present example.

The depicted structure itself may be schematically and substantially identical to the above conventional structure shown in FIG. 22 or to other figures, while the present example has the function of the conventional communication module embedded in the CPU module.

Specifically, each configuration 10 (the portions enclosed by the dotted lines) shown in the figure includes a CPU module 11, an I/O module 12, etc. The modules 11 and 12 are connected to a device-level network 13. Note that the configuration 10 may also be referred to as a control unit 10, etc. The configuration 10 may be treated as a structure in which the CPU module 11 (controller) and the I/O module 12 (an example of an input/output target) are connected to the device-level network 13.

The CPU module 11 conducts communications with each I/O module 12 via the device-level network 13. The CPU module 11 is also connected to a controller-level network 1. The CPU module 11 also has the function of the conventional communication module as described above, and conducts communications with the CPU modules 11 of other configurations 10 via the controller-level network 1. Note that the function of the conventional communication module is a communication function in the controller-level network 1.

Also, a server apparatus 2 etc. may further be connected to the controller-level network 1 so as to conduct the monitoring control of the entire system and the production management. Each of the CPU modules 11 can also conduct communications with the server apparatus 2 via the controller-level network 1.

In this example, the CPU module 11 uses a controller having the controller-level network function described in for example a former application (PCT/JP2013/050121) ; however, the scope of the present invention is not limited to this example. For example, the CPU module 11 can be a CPU module etc. having a structure in which an interrupt signal is obtained in accordance with a processing cycle from the above conventional communication module. In other words, it is not always necessary to have the function of a communication module.

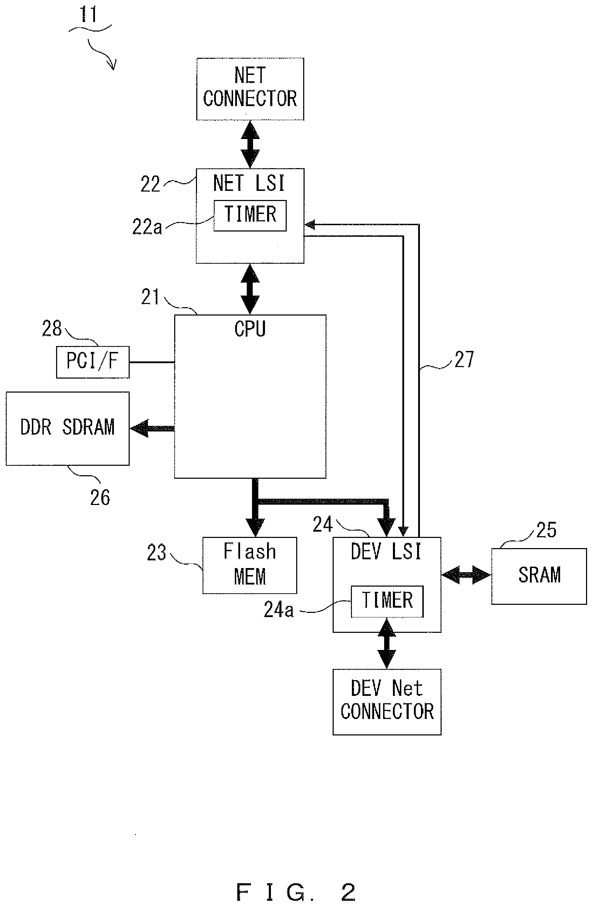

FIG. 2 shows a structure of the above CPU module 11. As described above, the CPU module 11 has a communication function in the controller-level network 1 in addition to a communication function in the device-level network 13, and thus the CPU module 11 also has a structure for it.

The CPU module 11 of the depicted example mainly includes a CPU 21, a controller-level-network control LSI (NET LSI) 22, a device-level-network control LSI (DEV LSI) 24, etc. Further, it includes a flash memory (FLASH MEM) 23, an SRAM 25, a DDR SDRAM 26, signal lines 27 and a PC I/F 28, etc.

The CPU 21 controls the execution (control computation) of controller application software, the above NET LSI 22, DEV LSI 24, etc. Note that a program (system software, controller application software, etc.) for making the CPU 21 execute the above various functions is stored in advance in the above FLASH MEM 23, which is a non-volatile memory. The CPU 21 implements various functions including the above control, etc., by executing this program. Note that the program is developed onto the above DDR SDRAM 26 etc., which is a high-speed memory device, when it is executed.

Note that the CPU 21 may be configured of one CPU or may be configured of a plurality of CPUs. Regarding this, a plurality of CPUs may correspond to the respective functions.

Also, in the present example, an SRAM 25 for storing control data etc. is provided to the DEV LSI 24. In the SRAM 25, for example a TF frame, an MC frame, etc., which will be described later, are stored temporarily. Note that the CPU 21 also can access the SRAM 25 via the DEV LSI 24.

Further, the DEV LSI 24 includes a TIMER 24a. The TIMER 24a is used for synchronizing the data output timings with the respective connected devices (such as the I/O module 12 etc.) in the device-level network 13. A takt counter 41, which will be described later, may be considered to be an example of the TIMER 24a. In other words, TIMER 24a in the present example generates a takt cycle of basically 1ms. As a matter of course, the scope of the present invention is not limited to this example.

Similarly, the NET LSI 22 also includes a TIMER 22a. Regarding communications in the controller-level network 1, the TIMER 22a is used for synchronizing the respective controllers (the CPU modules 11). In the present example, the controller cycle of basically 5ms is generated.

In the present explanations, a cycle related to the device-level network 13 is referred to as a takt cycle, while a cycle related to the controller-level network 1 is referred to as a controller cycle. Hereinafter, in the specific examples, the takt cycle is 1ms and the controller cycle is 5ms. The cycle start timing is a timing for starting each cycle, and in the case of the takt cycle for example, the moment that is 1ms later than an arbitrary takt cycle start timing is the next takt cycle start timing.

The NET LSI 22 is connected to the controller-level network 1 via the depicted NET connector. Similarly, the DEV LSI 24 is connected to the device-level network 13 via the depicted DEV NET connector.

Also, the above signal lines 27 are provided for connecting the NET LSI 22 and the DEV LSI 24. The NET LSI 22 and the DEV LSI 24 can conduct direct signal transmission and reception via the signal lines 27.

The signal lines 27 can be treated as interrupt signal lines from both the NET LSI 22 and the DEV LSI 24 as an example. Communications in the controller-level network 1 and the device-level network 13 in the present example are executed in prescribed cycles respectively of those networks, and the controller-level network 1 has a cycle basically longer than that of the device-level network 13. As described above, it is assumed as a specific example that the controller-level network 1 has a cycle of 5ms and the device-level network 13 has a cycle of 1ms. It is also possible for the NET LSI 22 and the DEV LSI 24 to report an interrupt specifying the cycle start timing of themselves to each other via the signal line 27.

In the present method, regarding the above plurality of CPU modules 11, one of such CPU modules 11 is set as a master station while the others are set as slave stations. Then, regarding the controller-level network 1, the controller cycle start timings of each slave stations are synchronized by referring to the controller cycle start timing of the master station. However, before that, the master station determines the controller cycle start timing of itself by for example the method below.

Specifically, in the present method, the master station generates the above controller cycle start timing of itself on the basis of the above takt cycle start timing of itself. For this, mutual interrupt reports of the LSIs via the signal lines 27 in FIG. 2 are used. Specifically, in a case of the above specific example, the NET LSI 22 transmits an interrupt report every 5ms to the DEV LSI 24 via the signal line 27. The DEV LSI 24 transmits an interrupt report every 1ms to the NET LSI 22 via the signal line 27.

By utilizing this, the NET LSI 22 determines the controller cycle start timing on the basis of the above interrupt report transmitted every 1ms from the DEV LSI 24. In the above example, five interrupt reports from the DEV LSI 24 constitute one cycle of the controller-level network 1.

Thereafter, on the basis of the controller cycle start timing of the master station after the above determination (adjustment), the controller cycle start timing of each slave station is adjusted (corrected). In other words, the controller cycle of each slave station is synchronized with the controller cycle of the master station. For this, the method described in for example the above former application (PCT/JP2013/050121) is used.

Further, on the basis of the adjusted (corrected) controller cycle start timing for each slave station, the its own takt cycle start timing of device-level network 13 is adjusted. In other words, for each slave station and in the above structure of FIG. 2, the DEV LSI 24 adjusts the its own takt cycle start timing of device-level network 13 on the basis of interrupt reports (report transmitted once every 5ms) transmitted via the signal line 27 from the NET LSI 22. This adjustment process will be described later in detail.

Note that the structure shown in FIG. 2 is an example, and the scope of the present invention is not limited to this example. For example, as another example, the function of the NET LSI 22 may be included in the CPU 21. This may employ a configuration in which the function of Ethernet (registered trademark) is included by configuring the controller-level network 1 based on Ethernet (registered trademark). As a matter of course, the signal lines 27 are provided between the CPU 21 and the DEV LSI 24 in this example. Also, an interrupt signal is transmitted via the signal line 27 from the DEV LSI 24 to the CPU 21 for example. The CPU 21 for example makes an interrupt through the read/write interface for the DEV LSI 24 for example. However, this example does not limit the scope of the present invention, and the signal lines 27 may be treated as for example the register read/write interface for both.

Alternatively, while the present example shows the NET LSI 22 and the DEV LSI 24 as separate chips, the functions of the NET LSI 22 and the DEV LSI 24 may be implemented on the same LSI by using a large-scale LSI.

In any case, in the present example, the NET LSI 22 and DEV LSI 24 can report to each other the interrupt timing of each of them via for example the signal lines 27. Thereby, in the CPU module 11, the controller cycle start timing of itself can be corrected so as to be synchronized with the takt cycle start timing of itself. It is also possible to reversely correct the takt cycle start timing of itself to synchronize the controller cycle start timing of itself.

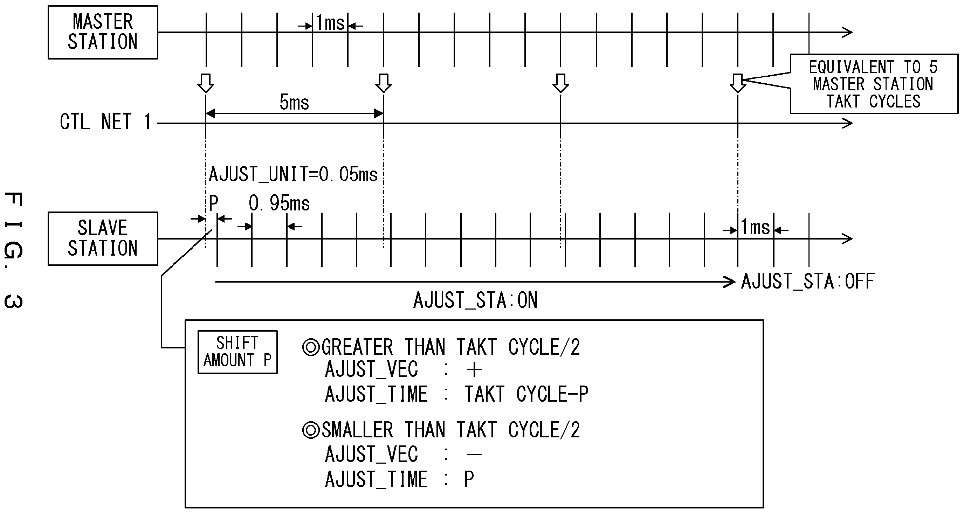

Thereby, it is possible to synchronize the controller cycle start timings and takt cycle start timings of for example all configurations. A specific concept is shown in FIG. 3.

Similarly to the above, it is assumed also in the example of FIG. 3 that the cycle of the controller-level network 1 (controller cycle) is 5ms and the cycle of takt interrupt timing (takt cycle) is 1ms.

Also, FIG. 3 shows a state in which in the master station the controller cycle start timing of itself has been synchronized with the takt cycle start timing of itself.

When for example the master station recognizes itself as the master at the activation, it uses, as a reference timer, the takt cycle start timing of itself for generating the controller cycle start timing. In other words, in the present example, the controller cycle start timing arrives every five takt cycle start timings. Thereby, in the master station, the takt cycle start timing of itself and the controller cycle start timing of itself are synchronized.

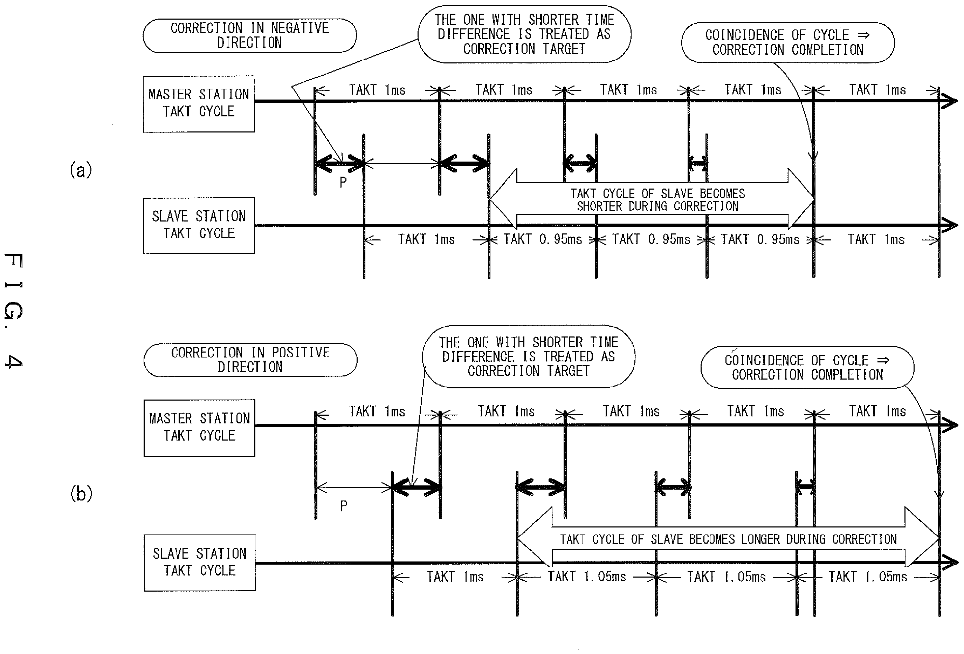

Thereafter, the controller cycle start timing of each slave station is synchronized with the controller cycle start timing of the master station. Thereby, the controller cycle start timings of the slave stations are assumed to be synchronized with that of the master station, although this is not shown. Also, as shown in the figure, regarding an arbitrary slave station, it is assumed that the controller cycle start timing of itself is shifted from the takt cycle start timing of itself. The amount of this shift is "P", appearing in FIG. 3 and FIG. 4.

Thereby, the present method modifies shift P above of the takt cycle start timing of itself in the slave station on the basis of the controller cycle start timing of itself. Thereby, the takt cycle start timing of itself is synchronized with the controller cycle start timing of itself. This means that the takt cycle start timing of itself is synchronized with the takt cycle start timing of the master station.

From the above, each slave station detects shift amount P between the takt cycle start timing of itself and the takt cycle start timing of the master station indirectly via the controller cycle so as to correct this shift, and thereby synchronizes the takt cycle start timing of itself with the takt cycle start timing of the master station.

However, as will be described in FIG. 4 later, whether or not detected shift amount P is set as the correction amount as it is depends upon each case. Also, the correction equivalent to the correction amount is not always conducted at one time, and there is an upper limit for the correction at one time. As an example, the upper limit value for correction (correction value) is assumed to be 0.05ms. Accordingly, when correction amount>upper limit value, the shift is corrected a plurality of times in a divided manner. When the correction amount is assumed to be 0.15ms for example, the correction of 0.05ms is conducted three times. The concept of the detection/calculation of the shift amount/correction amount as described above is shown in FIG. 4(a) and FIG. 4(b).

FIG. 4(a) and FIG. 4(b) respectively show the takt cycle start timings of the master station and slave station, and thereby show an example of shift amounts. Shift amount "P" detected in this example is a period of time between an arbitrary controller cycle start timing and the takt cycle start timing of a slave station that is immediately after the arbitrary controller cycle start timing as described above. However, detected shift amount "P" is not always set as the correction amount as it is. Note that AJUST_TIME, which will be described later, means the correction amount.

In the present example for example, in a case of the example as shown in FIG. 4(a), detected shift amount "P" is set as correction amount "AJUST_TIME", which will be described later, as it is, and correction direction "AJUST_VEC" is set to "-". In the case of the example as shown in FIG. 4(b), "takt cycle - P" is calculated from detected shift amount "P" and the resultant value is set as correction amount "AJUST_TIME", which will be described later, and the correction direction "AJUST_VEC" is set to "+" . Note that AJUST_TIME, which will be described later, is a phase shift period to be adjusted by a slave station (correction amount).

As an example, the correction amount and the correction direction vary depending upon whether or not shift amount "P" above is equal to or greater than "takt cycle/2" (0.5ms in the present example) . When shift amount "P" is equal to or greater than "takt cycle/2", the correction amount is set to "takt cycle-P" and is modified to the positive direction. When shift amount "P" is smaller than "takt cycle/2", shift amount P is set as the correction amount as it is and is modified to the negative direction.

FIG. 4 (a) shows an example of a case where shift amount "P" is smaller than "takt cycle/2". FIG. 4(b) shows an example of a case where shift amount "P" is equal to or greater than "takt cycle/2".

Also, in the present example, there is an upper limit for the correction value (correction amount for one time), and this upper limit value is set as "adjustment unit time AJUST_UNIT", which will be described later. In the present example, it is assumed that AJUST_UNIT=0.05ms.

In the above case of the modification to the negative direction, the takt cycle is set to "takt cycle-AJUST_UNIT". In the present example, takt cycle=1-0.05=0.95ms. Thereby, as shown in FIG. 4(a), takt cycle==0.95ms during the correction period.

In the above case of modification to the positive direction, the takt cycle is set to "takt cycle+AJUST_UNIT". In the present example, takt cycle=1+0.05=1.05ms. Thereby, as shown in FIG. 4(b), takt cycle==1.05ms during the correction period.

As described above, the present example corrects a shift by changing the length of a takt cycle temporarily. In particular, by conducting correction during a plurality of cycles of the device-level network, i.e., by providing an upper limit for the correction amount for one time of correction, the entire system can be synchronized without causing data breakage or process omission of the device-level network.

Note that, on the processing level, correction of a shift consists of the correction of a shift between the controller cycle start timing and the takt cycle start timing of each slave station, whereas, on the substantial level, it consists of the correction of a shift between the takt cycle start timing of the master station and the takt cycle start timing of each slave station as shown in FIG. 4 (a) and FIG. 4 (b) .

As described above, in the present method, cycle start timing correction is conducted in the order of "controller cycle start timing of master station", "controller cycle start timing of each slave station" and "takt cycle start timing of each slave station" by using the "takt cycle start timing of master station" at first as a reference, thereby making it possible to synchronize the entirety.

For example, as explained by referring to FIG. 3 and FIG. 4, the function of correcting the takt cycle start timing of each slave station (timer control unit) in each slave station is included in for example the DEV_LSI 24.

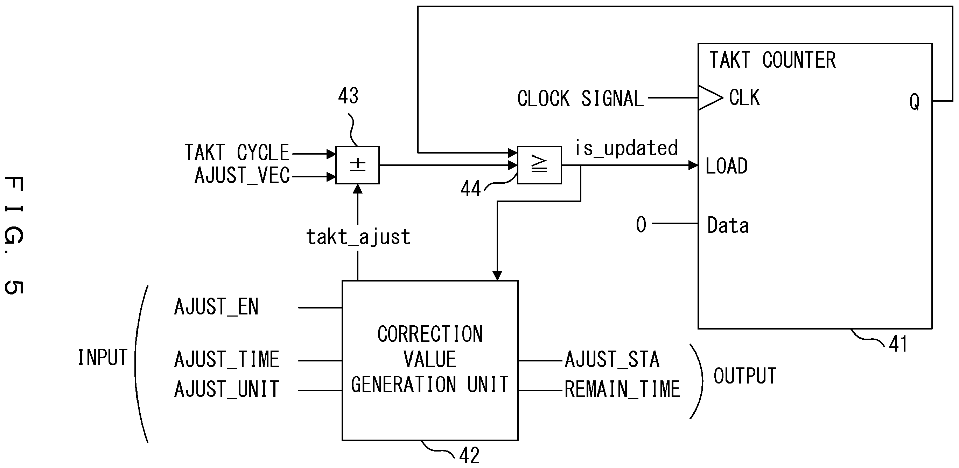

FIG. 5 shows a structural example of the timer control unit of the DEV_LSI 24.

Note that the timer correction function is a hardware function included in the DEV LSI 24 in the present example, although this example does not limit the scope of the present invention, and for example the timer correction function may be implemented in a form of software that operates in the CPU 21.

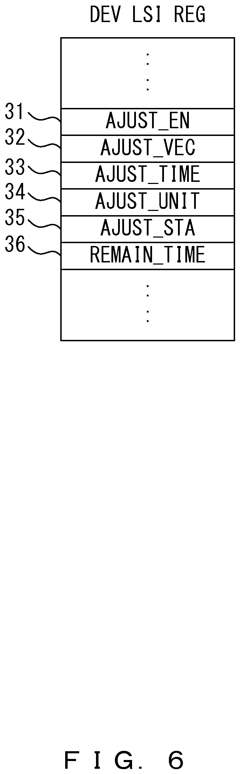

Also, FIG. 6 shows a register interface example of various types of signals related to the timer control unit shown in FIG. 5.

Also, by referring to FIG. 6, various types of signals will be explained.

It is assumed that the timer control unit of the present example uses various types of signals such as AJUST_EN 31, AJUST_VEC 32, AJUST_TIME 33, AJUST_UNIT 34, AJUST_STA 35, REMAIN_TIME 36, etc. Note that in addition to these signals, "takt_ajust" signal, "is_updated" signal, etc. shown in FIG. 5 are also generated in the timer control unit.

AJUST_EN 31, AJUST_TIME 33 and AJUST_UNIT 34 are input to a correction value generation unit 42 shown in FIG. 5. Note that FIG. 5 will be explained later. The correction value generation unit 42 generates AJUST_STA 35, REMAIN_TIME 36, etc. on the basis of these inputs. AJUST_EN 31, AJUST_TIME 33, AJUST_UNIT 34 and AJUST_VEC 32 are generated externally (for example in NET LSI 22).

Note that the AJUST_VEC 32 is input to an adder-subtractor 43 shown in FIG. 5. Note that the register shown in FIG. 6 may be considered to be included in the correction value generation unit 42. However, this example does not limit the scope of the present invention.

The AJUST_UNIT 34 is an upper limit value (unit time for adjustment) that is set in advance as has already been explained, and it is assumed in this example that AJUST_UNIT=0.05ms. The AJUST_TIME 33 is a phase shift period (correction amount), calculated/determined on the basis of detected shift amount "P" above, to be adjusted by a slave station. AJUST_VEC 32 also represents the adjustment direction (positive or negative) that is determined on the basis of shift amount "P" as described above.

AJUST_EN 31 is a bit representing an adjustment request, and the rising of this bit is recognized as an adjustment start. AJUST_EN 31 is a correction request reception bit transmitted from higher-order software or the controller-level network.

AJUST_EN 31 is generated by the NET LSI 22 and is input into the correction value generation unit 42 for example as described above. The NET LSI 22 obtains above shift amount "P" on the basis of the controller cycle start timing (cycle of 5ms) generate by itself and on an interrupt report transmitted every 1ms from the DEV LSI 24 via the signal line 27. Thereby, AJUST_TIME 33 and AJUST_VEC 32 are generated. Note that AJUST_TIME 33 represents the correction amount. AJUST_VEC 32 is a bit representing the correction direction.

When for example this AJUST_TIME is not "0" or is equal to or greater than a prescribed value, NET LSI 22 considers timing adjustment to be necessary so as to turn on AJUST_EN 31. As a matter of course, upon the NET LSI 22, generated AJUST_TIME 33 and AJUST_VEC 32 are input to the correction value generation unit 42.

At a rising timing of AJUST_EN 31, the correction value generation unit 42 copies AJUST_TIME 33 onto REMAIN_TIME 36. Alternatively, correction value generation unit 42 converts AJUST_TIME 33 into a counter value of the takt counter 41, which will be described later, and sets the conversion result as REMAIN_TIME 36.

Thereafter, the correction value generation unit 42 subtracts a time equivalent to AJUST_UNIT 34 from REMAIN_TIME 36 each time adjustment is conducted. In other words, the correction value generation unit 42 updates REMAIN_TIME 36 on the basis of "REMAIN_TIME 36=REMAIN_TIME 36-AJUST_UNIT 34".

Also, when REMAIN_TIME 36 is greater than "0", the correction value generation unit 42 turns on AJUST_STA 35 (one bit).

AJUST_STA 35 is a bit representing a fact that a correction process is being conducted or that correction has been completed. AJUST_STA 35 represents, by being ON, the fact that a correction process is being conducted, and represents, by being OFF, the fact that correction has been completed.

REMAIN_TIME 36 is generated/updated as described above on the basis of AJUST_TIME 33 set from a higher stage, and is treated as information representing a remaining correction amount and thereby representing a remaining time of the correction process.

AJUST_UNIT 34 represents a unit time during which correction can be conducted at one time relating to the cycle of the device-level network. This correction permitted unit time AJUST_UNIT 34 may be a fixed value or may be set in a software manner in accordance with the control cycle of the device-level network. Correction permitted unit time AJUST_UNIT 34 is a value determined and set by the person who is responsible for developing the system or other people in advance, and is determined on the basis of for example the takt cycle and the band time of the input/output process (when the number of the I/O modules, the I/O size and the takt cycle are determined, it can be calculated to be a unique value).

It is sufficient for AJUST_UNIT 34 to set the time to be shorter than the period that is shorter between an allowance time from after the MSG band to the transmission of the next TF frame and an allowance time from the transmission of a TF frame to the transmission of an MC frame. As a matter of course, this example does not limit the scope of the present invention.

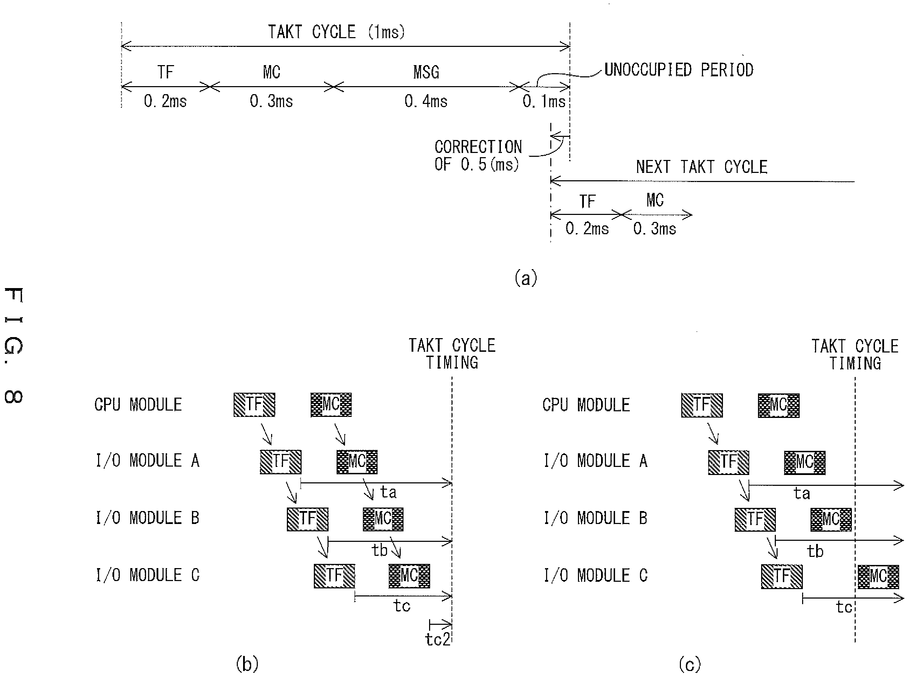

By referring to FIG. 8, explanations will be given for a method of determining AJUST_UNIT 34 above.

First, as explained in FIG. 24, the takt cycle (above "bus/takt cycle" in this example) has been divided into bands of TF, MC and MSG. Usually, a margin is given to some extent. Thereby, in the example where above takt cycle=lms, there is an unoccupied period (margin) equivalent to 0.1ms when TF band=0.2(ms), MS band=0.3 (ms) and MSG band=0 . 4 (ms) as shown in for example FIG. 8(a). Accordingly, in this example, even when the next takt cycle start timing is advanced by 0.05ms, no problem occurs because it is an arbitrary timing in the unoccupied time range as shown in the figure. Note that advancing of the next takt cycle start timing by 0.05ms results in the takt cycle of 0.95ms as shown in FIG. 4(a) for example. AJUST_UNIT 34 is determined by for example this method.

In the example shown in FIG. 4 (b), the next takt cycle start timing is postponed by 0. 05ms and postponement by too long a period causes the following problem, and the value of AJUST_UNIT 34 has to be set by taking that phenomenon into consideration.

First, it is assumed for example that the takt cycle start timing of each I/O module is determined for each I/O module by referring to the TF frame reception time. As shown in FIG. 8 (b) for example, I/O module A sets a point in time that is later by time ta than the TF frame reception time as the takt cycle start timing. Similarly, I/O module B sets a point in time that is later by time tb than the TF frame reception time. I/O module C sets a point in time that is later by time tc than the TF frame reception time as the takt cycle start timing. ta, tb and tc are determined by the CPU module and are reported to each I/O module. No explanations will be given for the determining method, whereas ta, tb and tc are determined in such a manner that all I/O modules have the same takt cycle start timing as shown in FIG. 8(b).

However, in actuality, a TF frame may be lost, and accordingly each I/O module has determined the takt cycle start timing in the cycle of for example 1 ms on the basis of a timer etc. included in it after determining the takt cycle start timing by referring to the TF frame reception time as described above.

In this example, FIG. 8(b) shows a usual case, and FIG. 8(c) shows a case where the next takt cycle start timing has been postponed as shown in FIG. 4(b) or the other figures.

When the next takt cycle start timing has been postponed in a CPU module, the MC frame transmission timing based on the CPU module is delayed correspondingly, also delaying the MC frame reception timing of each I/O module as shown in FIG. 8(c).

Because it is difficult to modify immediately the takt cycle start timing, the timing shown in for example FIG. 8(b) remains unchanged, which means that the MC frame reception timing becomes closer to the takt cycle start timing. Also, a great delay may lead to a situation where the MC frame reception timing is later than the takt cycle start timing as shown in FIG. 8(c), particularly in I/O module C, which receives the frame the latest. In such a case, I/O modules A and B operate computation on the basis of the latest output (instruction etc.) obtained from the current MC frame, whereas I/O module C alone operates computation on the basis of old output obtained from the previous MC frame.

As was explained in FIG. 24, each I/O module starts computation by using the MC data that is the latest currently at the takt cycle timing of itself.

In this example, each I/O module controls a control target device (such as a motor etc.) on the basis of a CPU module output (instruction etc.) obtained from for example an MC frame in the computation time shown in FIG. 24. If I/O modules A through C shown in the figure respectively control three motors related to one belt, a situation may occur in which while I/O modules A and B activated the motors to start the operation on the basis of the latest instructions (set as activation instructions), I/O module C alone keeps the motor in a halted state. In such a case, naturally, the control target device operates abnormally.

Due to for example the reasons described above or other reasons, when a period of time from the MC frame reception time of for example I/O module C, which receives an MC frame the latest, to the takt cycle start timing is tc2, the value of AJUST_UNIT 34 is determined so that it is smaller than tc2.

From the above, two types may be set for the value of the AJUST_UNIT 34, one being for a case where the takt cycle start timing is advanced and the other being for a case where it is postponed in a CPU module.

Hereinafter, explanations will be given for the timer control unit shown in FIG. 5.

The timer control unit includes a takt counter 41, a correction value generation unit 42, an adder-subtractor 43, a comparator 44, etc.

The takt counter 41 is a counter having a load function for counting up on the basis of a prescribed clock signal, and generates/outputs the takt cycle start timing (takt interrupt signal) of the device-level network. Note that the takt counter 41 itself employs a conventional structure.

The takt counter 41 is an up counter having a load function, and counts up for every rising of clock signal CLK so as to increment counter value Q by one. When the input to the LOAD terminal has turned ON, counter value Q is reset to "0" in accordance with the input (=0) to the Data terminal. For clock signal CLK, a clock etc. of the DEV LSI 24 is used.

The adder-subtractor 43 employs a structure for correcting the takt cycle during a correction process, and will be explained later.

The comparator 44 compares output (counter value Q) of the takt counter 41 and the takt cycle corrected by the adder-subtractor 43, and turns on the output ("is_updated" signal) when counter value Q is equal to or greater than "corrected takt cycle". This "is_updated" signal is input to the above LOAD terminal and is also input to the correction value generation unit 42.

The correction value generation unit 42 sets the above AJUST_TIME, AJUST_UNIT and AJUST_EN as input, starts a correction process at the rising of AJUST_EN, and first copies AJUST_TIME onto REMAIN_TIME. Thereafter, while updating REMAIN_TIME on an as needed basis, it sets the value that is smaller between REMAIN_TIME and AJUST_UNIT as "takt_ajust" shown in the figure and outputs the value to the adder-subtractor 43.

AJUST_STA is turned on at the rising of AJUST_EN, and is turned off when REMAIN_TIME becomes zero. The correction value generation unit 42 turns on/off AJUST_STA. Note that as described above, the state where AJUST_STA=ON represents the fact that a correction process is being conducted and the state where AJUST_STA=OFF represents the fact that the correction has been completed.

By using, as input, AJUST_VEC representing addition (+) or subtraction (-), the takt cycle of the device-level network (1ms in the present example), and correction value "takt_ajust" above, the adder-subtractor 43 outputs a computation result based on this input to the comparator 44.

When AJUST_VEC is positive, the adder-subtractor 43 generates "takt cycle+"takt_ajust"" as the "corrected takt cycle" above so as to output it to the comparator 44. When AJUST_VEC is negative, the adder-subtractor 43 generates "takt cycle-"takt_ajust"" as the "corrected takt cycle" above so as to output it to the comparator 44.

When output Q of takt counter 41 becomes equal to or greater than the input (corrected takt cycle) to the comparator 44, the comparator 44 turns on the output. Output (is_updated) of the comparator 44 is input to the LOAD terminal of the takt counter 41, and turning on of the output resets the comparator 44 (reload) and outputs a takt interrupt signal (not shown) from the takt counter 41. Note that in the conventional example, the structure may be considered to be one having only the takt counter 41 and the comparator 44. In the conventional example, in this structure, the comparator 44 may be considered to be one that generated a takt interrupt signal by a structure in which the takt cycle and counter value Q above are input.

In this example, output ("is_updated") of the comparator 44 has also been input to the correction value generation unit 42. Then, the correction value generation unit 42 subtracts AJUST_UNIT from REMAIN_TIME by the rising when the above output (is_updated) is turned on. In other words, REMAIN_TIME is updated by "REMAIN_TIME=REMAIN_TIME-AJUST_UNIT".

Note that AJUST_UNIT is a value that is calculated to be a unique value by a personal computer (support tool etc.) when the takt cycle of the controller is set by the user. AJUST_EN is turned on by software on the controller that has recognized that the controller operates as a slave in the controller-level network and that the interrupt of the network timer of the higher-stage controller-level network is shifted from the takt cycle of the device-level network.

Then, each output signal is generated by the following logic (described in a C-language-like manner in this example) in the correction value generation unit 42.

```
 • REMAIN_TIME
 IF (AJUST_EN == ON) {
      IF (AJUST_EN previous value == OFF) { /*AJUST_EN
 rising*/
           REMAIN_TIME = AJUST_TIME;
      } ELSE IF (is_updated == ON) {
           IF (REMAIN_TIME >= AJUST_UNIT) {
                REMAIN_TIME = REMAIN_TIME - AJUST_UNIT;
           } ELSE {
                REMAIN_TIME = 0;
           }
      }
 }
```

Hereinafter, the process of generating the REMAIN_TIME signal above will be explained.

As described above, at the rising of AJUST_EN, i.e., when AJUST_EN is turned on from off, AJUST_TIME is assigned to REMAIN_TIME. Also, even when AJUST_EN is in the on state, REMAIN_TIME is updated if "is_updated" is turned on. This updating method sets, as a new REMAIN_TIME, a value obtained by subtracting AJUST_UNIT from the current REMAIN_TIME when REMAIN_TIME is equal to or greater than AJUST_UNIT. When REMAIN_TIME is smaller than AJUST_UNIT, REMAIN_TIME is set to zero.

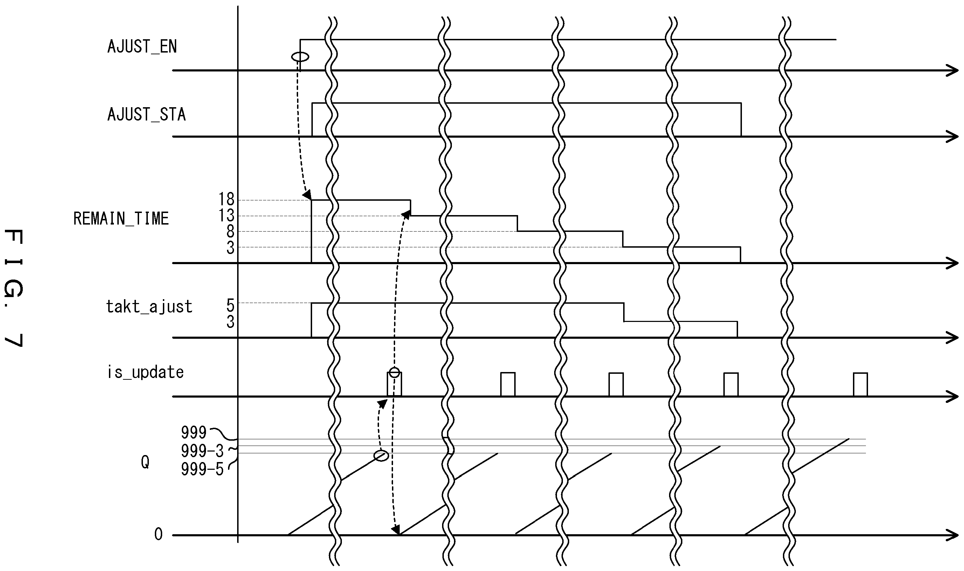

In the example shown in FIG. 7, which will be described later, because REMAIN_TIME is "18" and AJUST_UNIT is "5", as shown in the figure REMAIN_TIME is set to "18" at the rising of AJUST_EN, and thereafter the value of REMAIN_TIME is decremented by "5" each time "is_updated" is turned on. In other words, the value of REMAIN_TIME is sequentially updated in the order of 18→13→8→3 as shown in the figure. Then, at the end, REMAIN_TIME becomes "0" because REMAIN_TIME (=3) is smaller than AJUST_UNIT (=5).

```
 • AJUST_STA
 AJUST STA = (REMAIN_TIME <> 0);
```

The process of generating AJUST_STA signal above will be explained.

When REMAIN_TIME 36 is greater than "0", AJUST_STA 35 is turned on. In the case of the example shown in FIG. 7, AJUST_STA 35 is turned on when REMAIN-TIME is set to "18" at the rising of AJUST_EN as described above. Thereafter, AJUST_STA 35 remains in the on state before REMAIN_TIME becomes "0" at the end after being decremented by "5" as described above.

```
 • takt_ajust
 IF (AJUST_STA == ON) {
     IF (REMAIN_TIME >= AJUST_UNIT) {
          takt_ajust = AJUST_UNIT;
     } ELSE {
          takt_ajust = REMAIN_TIME;
     }
     } ELSE {
     takt_ajust = 0;
     }
```

The method of generating the above takt_ajust signal will be explained below.

REMAIN_TIME and AJUST_UNIT are compared, and the smaller value is output to the adder-subtractor 43 as takt_ajust. Thereby, in the case of the example shown in FIG. 7, when REMAIN_TIME is "18", "13" or "8", the value (=5) of AJUST_UNIT is output as takt-ajust. When REMAIN_TIME is "3", the value "3" is output as takt_ajust.

Note that when AJUST_STA has been turned off, takt_ajust is set to "0".

FIG. 7 is a timing chart of the various types of signals related to the correction value generation unit 42.

This example is an operation example in the following condition.

Specifically, it is a case where clock CLK=1µs, takt cycle=lms, AJUST_UNIT=5µs, AJUST_VEC is a negative direction and AJUST_TIME is 18µs. Because the takt counter 41 starts counting from zero, 999 is set in the case of 1ms (1000µs). Note that while the negative direction is used as an example, basically the same principle is applied to the case of the positive direction, with the only difference being that the corrected takt cycle is adjusted in the positive direction.

Here, the various types of the signals shown in FIG. 7 have been explained almost thoroughly, and the value of takt_ajust remains "5" for awhile after AJUST_EN has been turned on, and the value returns to "0" as the final stage after becoming "3". Thereby, the operation of the takt counter 41 is as represented by output value Q thereof in FIG. 7 and also by is_updated". When the value of takt_ajust is "5", "is_updated" is turned on with the Q value being "994"(=999-5), the takt counter 41 is reset, and it again counts up from "0". In other words, it is reset with a time shorter than usual, and thereby the takt cycle becomes shorter than usual.

Thereafter, when the value of the takt_ajust is "3", "is_updated" is turned on when the Q value is "996" (=999-3) .

Note that the above processing function/operation of the correction value generation unit 42 may be implemented by the execution of a program by a CPU etc., or may be implemented by a programmable logic device (PLD) etc., although the implementation is not limited to these methods.

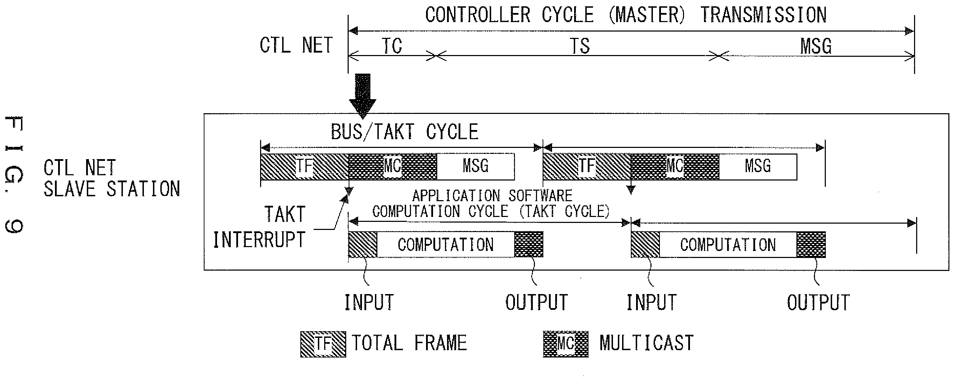

FIG. 9 shows an example of a cycle start timing control of the controller-level network and the device-level network.

In this example, the controller cycle is time divided into the TC band, the TS band and the MSG band shown in the figure . The TC band is a band for transmitting a synchronization frame. The TS band is a band for exchanging pieces of common memory data. The MSG band is a band for exchanging one-to-one messages between arbitrary stations.

In the example shown in FIG. 9, while two cycles of the takt cycle correspond to one cycle of the controller cycle, the scope of the present invention is not limited to this example naturally, and the ratio can be set arbitrarily by the setting by the user etc. However, as a general rule, the control cycle of a controller-level network is longer than the control cycle of a device-level network. Also, in the present method, from what has been described above, it is desirable that one cycle of the controller cycle be an integral multiple of the takt cycle. Thereby, it is possible to operate the device-level network and the controller-level network in a synchronized state.

Also, in the example shown in FIG. 9, the TC band starting position of the controller-level network is set as the MC frame transmission timing in the device-level network. This may be interpreted to be equivalent to the synchronization between the controller cycle start timing and the takt cycle start timing. In other words, as shown in FIG. 9, the controller cycle start timing means the TC band start position. Also, the takt cycle start timing (takt cycle start point 224) shown in FIG. 24 corresponds to the MC frame transmission start timing in the bus. Note that the bus used herein means the device-level network.

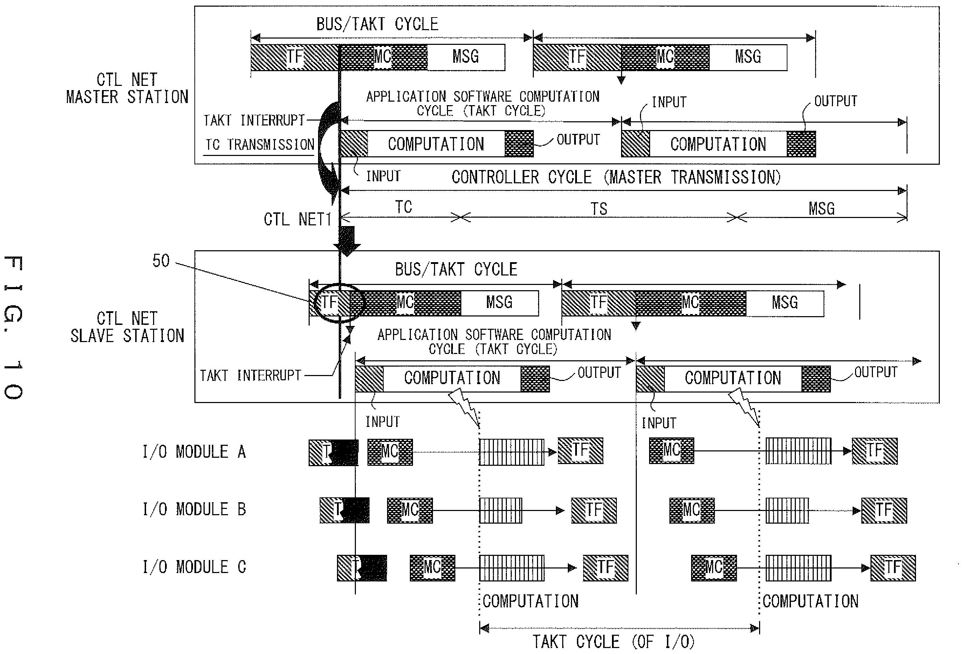

On the basis of the example shown in FIG. 9, FIG. 10 shows an example of a case where the takt cycle start timing was corrected on the basis of the controller cycle start timing without setting an upper limit. In other words, an operation example of a case where the shift amount is corrected at one time is shown here.

First, as shown in the upper portion of FIG. 10, in the master station, from the example shown in FIG. 9, one of two takt cycle start timings is set as the TC band start position (controller cycle start timing) of the controller-level network. This corresponds to the determining of a controller cycle start timing from a takt cycle start timing.

It is assumed herein that a takt cycle start timing is a start timing of the application software computation cycle shown in the figure and also is the MC frame transmission start timing in the bus/takt cycle shown in the figure. Herein, explanations will be given based on an assumption that the takt cycle in a CPU module has two types, i.e., an application software cycle and a bus/takt cycle. The application software computation cycle and the bus/takt cycle have already been explained in the prior art explanations etc. Also, a takt cycle has a takt cycle on the I/O module side as shown in the figure. As explained in the prior art portion, the synchronization of the takt cycle start timings of all I/O modules as shown in FIG. 10, i.e., the synchronization of the computation start timings, is a conventional technique.

Thereafter, it is assumed that the controller cycle start timing of an arbitrary slave station has been synchronized with the controller cycle start timing of the master station, although this is not shown. It is assumed herein that regarding this slave station, the shift denoted by numeral 50 has occurred between the MC frame transmission start timing and the TC band start position. When the takt cycle start timing is adjusted so as to modify this shift at one time, the MC frame transmission is conducted with a TF frame circulating through the respective I/O modules as shown in the figure. Thus, there is a possibility that the TF frame will be isolated in mid course, and the TF frame does not return to the CPU module appropriately, i.e., input data from each I/O module is not collected to the CPU module appropriately.

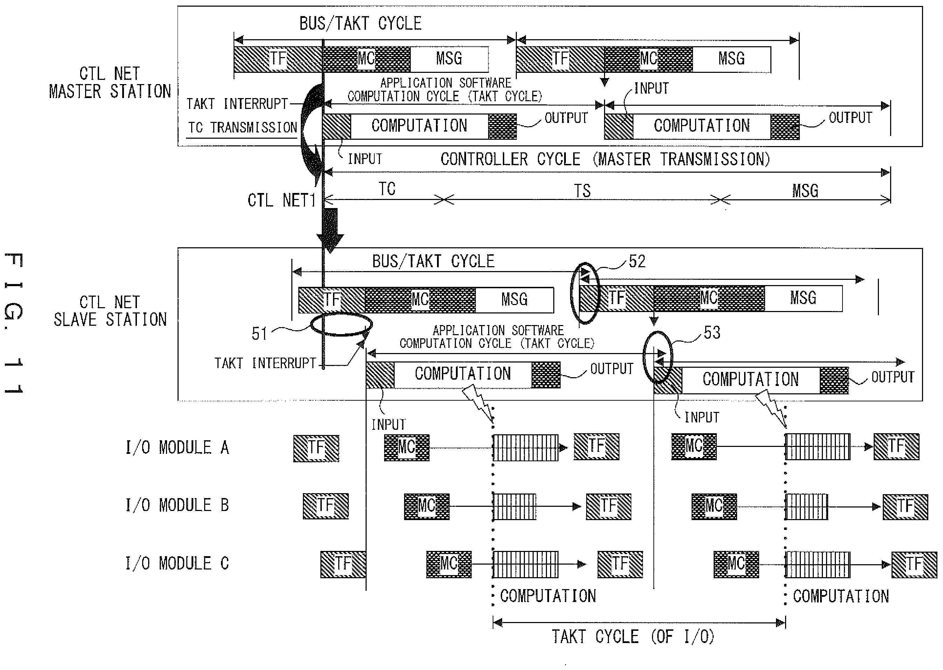

FIG. 11 shows an operation example of a case where the present method is applied to the example shown in FIG. 10.

As shown in FIG. 11, a shift amount denoted by numeral 51 in the figure, i.e., the amount of the shift between the MC frame transmission start timing and the TC band start position has become greater than that in the example of FIG. 10. However, as denoted by numerals 52 and 53 in the figure, the correction amount at one time has become smaller. In other words, the correction amount at one time has become the above upper limit value (=0.05ms) etc. This makes it possible to conduct the correction without problems.

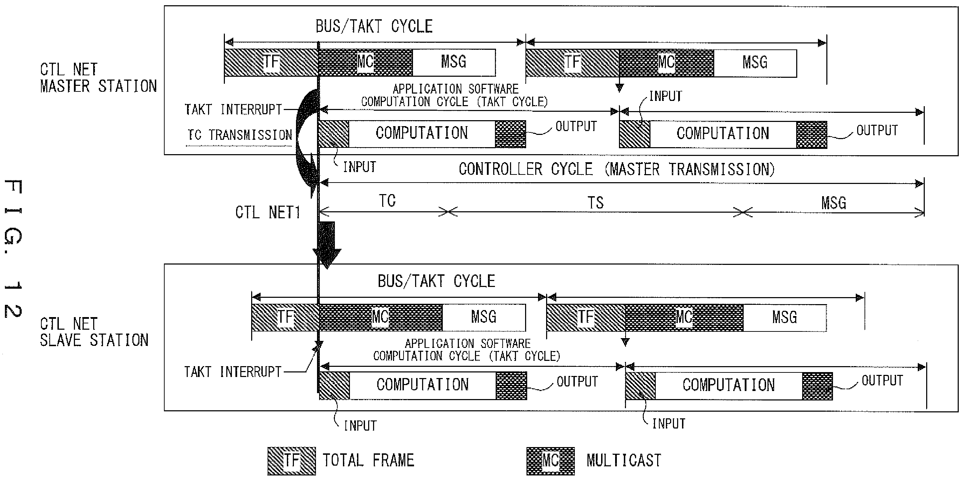

Then, by repeating a correction based on an upper limit for the correction amount at one time, the state becomes as shown in FIG. 12 as the final stage. In other words, as shown in FIG. 12, it enters a state where the MC frame transmission start timing and the TC band start position coincide in a slave station. This means that the takt cycle start timing is synchronized with the controller cycle start timing in a slave station. This also means that the takt cycle start timing of a slave station coincides with the takt cycle start timing of the master station.

The above example makes it possible to synchronize the network control cycles of all configurations without causing data exchange omission in a multi-configuration system including a plurality of programmable controllers.

Note that the above example is referred to as example 1.

The features described above in example 1 can also be interpreted in the following manner.

First, one of a plurality of controllers (CPU modules) is set as a master station and the rest of the plurality of controllers are set as slave stations, and in the master station, a timer counter of the device-level network is used for controlling the cycle of the controller-level network. This timer counter counts the above task cycle (1ms), and an example thereof is the takt counter 41. In the master station, the controller cycle is set to an integral multiple of the task cycle. In the master station, the controller cycle is generated on the basis of the task cycle in the station itself, and thereby the controller cycle is synchronized with that task cycle.

Then, by for example the process described in the former application, the controller cycle of each slave station is synchronized with the controller cycle of the above master station. Note that each slave station may generate the controller cycle start timing of for example the cycle of 5ms above by using a counter for the controller cycle of the station itself after the completion of the synchronization. Each slave station also has a timer counter of the above device-level network.

Thereafter, for each slave station, the takt cycle of itself is synchronized with the controller cycle of itself that was synchronized with the controller cycle of the above master station. This is implemented by obtaining the above correction direction and correction amount so as to temporarily change the cycle of the above timer counter based on them. When the correction amount is greater than the upper limit value in this process, the correction is conducted in a plurality of cycles of the device-level network. Note that the upper limit value is a unit that can be corrected at one time, and is determined and set in advance.

Note that a controller connected to the controller-level network does not always need synchronization. Accordingly, it is also possible to employ a structure in which it can be selected whether to conduct cycle control of the controller-level network by using the timer counter of the device-level network or to conduct cycle control of the controller-level network by using another timer counter.

Hereinabove, example 1 has been explained.

Next, example 2 will be explained hereinbelow.

Large-scale high-speed systems of recent years such as ones for metal rolling processing etc. collect actual measured values of a control parameter of the roller, the rotation speed of the roller, the pressure, etc., and measured analog values of a device connected to the device-level network, such as the temperature of the target to be rolled, the thickness of a plate, etc., and analyzes the data. A system that is applied to the preventive maintenance of a system structural device by tuning the parameters for improving the product quality and obtaining changes in the measured data is in demand.

Regarding this problem, as a method of collecting pieces of a data of a device that is a data collection target of a system, the method as described in Patent Document 2 above is proposed.

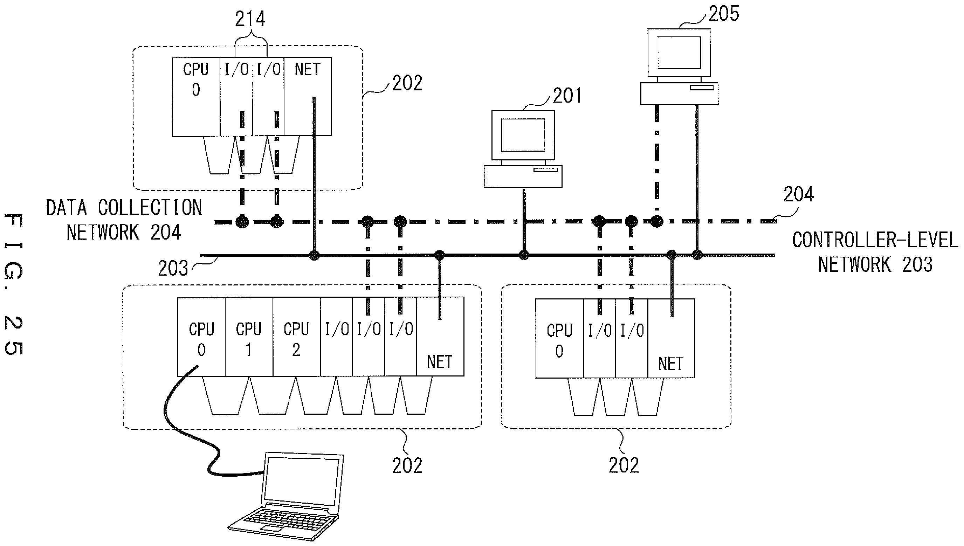

However, according to the method described in Patent Document 2, as shown in FIG.25 for example, a different network for data collection needs to be connected to a device that is a data collection target, leading to the following problems.
- It is necessary to conduct system control and data collection as separate processes in a data collection target device, leading to an increase in software loads on devices.
- Cables for data collection, which are provided additionally, increase the component cost, cable installation cost and system testing cost, etc.

Also, in a case where data collection is conducted by using a controller-level network without using a different network, the following problems arise regarding data to be collected.
- Only control data on the controller level can be collected.
- There are no dependence relationships between the controller-level network and the application software control cycle (application software computation cycle).
- As a general rule, the control cycle of the controller-level network is longer than the application software control cycle of the controller.

When it is not necessary to provide a separate collection network etc. and various types of data of the above device level are to be collected while avoiding an increase in the cost, it is sufficient to synchronize the control cycles of the device-level network in all controllers connected to the controller-level network and to treat data of the device-level network in the controller-level network together with time information serving as the reference for the entire system in the controller-level network.

Among the above conditions, the former condition (synchronization) is implemented by example 1 above. In other words, the takt cycle start timings have been synchronized for all controllers by example 1. The latter condition (time information serving as the reference) will be described later.

Also, when the control cycle of the controller-level network is an integral multiple (two times or more, particularly) of the control cycle of the device-level network (for example when the takt cycle is 2ms whereas the controller cycle is 10ms, or other situations), it is desirable that the controller can collect data related to the device-level network (data of each I/O module etc.) so as to report the collected data in a lump to a higher-stage personal computer etc. in the control cycle of the controller-level network.

For this, for example, the collected data is copied onto a transmission data buffer region (buffer memory in the NET LSI 22 etc., which is not shown) related to the controller-level network each time of data exchange with an I/O module etc. in the device-level network, identification information indicating the device level control cycle (takt cycle) used for the collection is added to the data, and the resultant data is transmitted to the controller-level network.

A higher-stage personal computer receives the above data transmitted from each controller via the controller-level network. Also, it can distinguish the temporal sequence of the respective pieces of data on the basis of the added data above etc.

The above respective processes will be described later in detail.

Here, example 2 may employ a system structure that is substantially similar to that of example 1, and the illustration and explanations thereof will be omitted.

In the above configuration, control of the downloading of control application software, the activation/halting of application software, monitoring by using a monitor device, etc., is conducted by a higher-stage support tool etc.

As a general rule, the various processes in each configuration are conducted mainly by the CPU, which controls the execution of the control application software, and the communication function is also included. Respective configurations are arranged apart functionally and physically and the data exchange based on the communication function is not synchronized as general rule.

For example, the server apparatus 2 above has separate communications with each controller in order to collect pieces of information of each configuration, to report instructions via the controller-level network. Even when the server apparatus 2 attempts to collect pieces of data of device level devices (I/O modules etc.) in a lump, the data obtainment timings are made different by the communication timings, and there is no guarantee of the obtainment timing even when the target is data collected in a series of process.

The present applicant has proposed a synchronization method related to a plurality of controllers connected to a controller-level network in the former application (PCT/JP2013/050121) .

According to this invention, by utilizing the invention of former application 2 (International Publication Number: WO2013/121568A1) for the controller-level network so as to use the "timer" used in this controller-level network for the management of the cycle of executing the controller application software, it is possible to synchronize controllers belonging to different configurations.

Incidentally, as a network to be applied to the device level of a controller, there is a network such as the one disclosed by Japanese Laid-open Patent Publication No. 2012-68856. This network is a network that synchronizes timings of output to I/O devices in a network that forms a ring. By applying this device-level network to the controller of the present invention, control data is fed at a timing with which controllers and control devices thereof connected via the controller-level network are synchronized, making it possible to obtain collected data (data input from each device in view of the controllers) at the same timing.

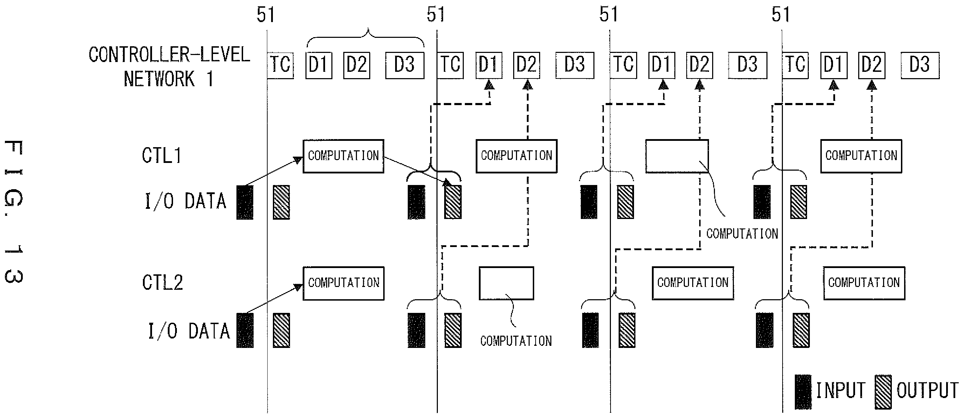

FIG. 13 shows a data collection operation example in example 2.

While FIG. 13 exemplifies a case where the takt cycle has the same length as the controller cycle, a controller cycle usually has a length that is an integral multiple of a takt cycle (twice or longer particularly) as described above. Also, FIG. 13 shows a state in which the controller cycles and the takt cycles are synchronized in all controllers in the system by example 1 above.

First, regarding the controller-level network, the master station transmits a synchronization frame (TC frame) at each controller cycle start timing to each slave station. "TC" shown in FIG. 13 represents the TC frame transmission timings.

Note that a synchronization frame is used inherently for adjusting the control cycle start timing of each controller in the entire system, as described in for example a former application 2 (International Publication Number: WO2013/121568A1). However, the adjustment of control cycle start timings are not always conducted by using a synchronization frame in the present method. In the present method, by using time information etc. included in a synchronization frame, the temporal sequence of each piece of collected data is managed.

Here, numerals 51 in the figure denote control cycle start timings.

As described above, in the depicted case, controller cycle=takt cycle, and all control cycle start timings coincide by example 1, and thus numerals 51 in the figure represent the controller cycle start timing and the takt cycle start timings (start timings of application software computation cycles in this example) of all controllers (the master station and each slave station).

Also, in the example shown in FIG. 24, regarding operations (TF, MC, MSG) on the bus in a CPU module, TF frame reception completion occurs immediately before the takt cycle start timing and an MC frame transmission process occurs immediately after the takt cycle start timing. As described above, the CPU module transmits a TF frame to the bus, and this TF frame circulates through respective I/O modules, and returns to the CPU module. For this, each I/O module adds some information of itself to the TF frame. Thereby, the above TF frame reception completion means that the CPU module has collected pieces of information of the respective I/O modules.

When the processes of a CPU module are explained separately for the processes of the CPU 21 shown in FIG. 2 and the DEV_LSI 24, the operations (TF, MC, and MSG) on the bus are executed by the DEV_LSI 24. The above collected pieces of information of respective I/O modules are stored in for example the SRAM 25. This corresponds to the above TF frame reception completion. As shown in for example FIG. 24, the CPU 21 obtains the information of the TF frame from for example the SRAM 25 each time the takt cycle start timing arrives so as to execute a prescribed computation process etc. on the basis of that obtained information etc., and stores the result of the above computation in for example the SRAM 25. The DEV_LSI 24 outputs the computation result as the above MC frame to the bus each time the MC frame transmission timing arrives. This corresponds to the output of a computation result to each I/O module.

As described above, when the application software computation cycle is used as a reference, the operations on the bus (TF, MC, etc.) can be considered to be operations in which the TF frame reception computation (input) is conducted immediately before the cycle start timing and the MC frame transmission process (output) is conducted immediately after the cycle start timing . FIG. 13 shows these operations as "input" and "output". Because the control cycle start timing correction has been conducted by example 1 above, the timings of "input" and the timings of "output" coincide in all controllers (CTL1 and CTL2) shown in the figure. Note that only two controllers CTL1 and CTL2 are shown as examples of controllers (CPU modules).

Also, the TS band in the controller-level network has conventionally been time divided into bands assigned to respective controllers. In the example shown in FIG. 13, it is assumed that the shown band of "D1" has been assigned to CTL1 and the shown band of "D2" has been assigned to CTL2. Thereby, in the band assigned to the controllers themselves, the controllers CTL1 and CTL2 output the above "input" and output" that are the latest at that moment for each controller cycle. Also, this leads to a situation where "input" and "output" obtained at the same timing in all controllers are transmitted in a packet to a transmission destination in the controller-level network as shown in the figure. This packet transmission destination is for example the master station, the server apparatus 2, etc.

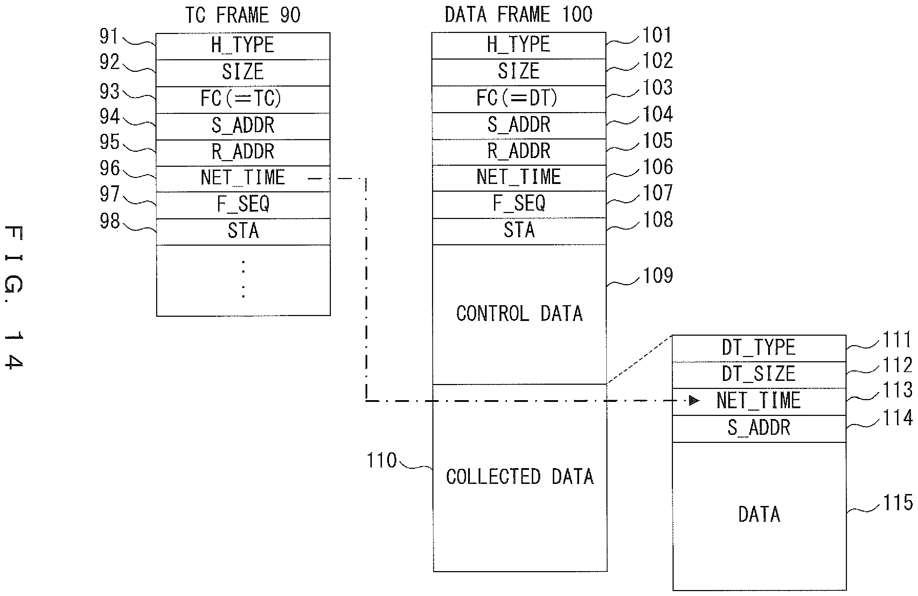

The master station or the server apparatus 2 can consider that all packets received in an arbitrary control cycle are "input" immediately before the start timing of that controller cycle (controller cycle start timing) and are "output" immediately after the controller cycle start timing. Accordingly, in the server apparatus 2, it is possible to properly estimate the collection time and output time of data of the received packet. However, in order to conduct the estimation more securely, it is desirable that the time information included in the above TC frame be used as described later. This will be explained by referring to FIG. 14 and other figures.

Note that, as explained in example 1, one controller cycle consists of a TC band, a TS band, etc., and the above TC frame is transmitted and received in the TC band. Also, as described above, the data transmission in each station is conducted in a TS band. Time division is conducted in a TS band, and the results are assigned to respective stations. Each station transmits data at the timing assigned to itself. For example, as shown in the figure, controllers CTL1 and CTL2 respectively transmit depicted data D1 and depicted data D2 at the depicted timings.

The controller cycle start timings are synchronized and the takt cycles are also synchronized between all controllers by the timing adjustment process in example 1 above. Thereby, as shown in the figure, controllers CTL1 and CTL2 perform the input processes at the same timing and also perform the output processes at the same timing. Thereby, for each controller cycle, data D1 and data D2 are pieces of data that were input/output at the same timing. This applies also to transmission data (depicted data D3 etc.) of other controllers. Accordingly, respective data frames (pieces of data D1, D2 and D3) transmitted in an arbitrary controller cycle for example are pieces of data that were input/output at the same timing.

Thereby, differently from the case of FIG. 26, omission and duplication of input/output data are prevented and all controllers transmit input/output data of the same timing to a transmission destination in the controller-level network.

Note that the timings of "input" or "output" do not have to be the timings shown in FIG. 13. For example, while "input" is immediately before the cycle start timing in FIG. 13, the scope of the present invention is not limited to this example. However, it is necessary to perform setting in advance so that all controllers have the same timing. When for example "input" is immediately after the cycle start timing, it is necessary to employ a structure in which "input" (TF frame reception completion) is conducted immediately after the cycle start timings in all controllers.

As described above, for each controller, the timings of "input" and "output" are determined on the basis of the cycle start timing etc. of itself, and these timings of "input" and "output" are set to be the same between all controllers in advance. Thereby, when the cycle start timings are adjusted so that they coincide for all controllers by example 1, "input" and "output" are conducted at the same timing for all controllers.

Data omission sometimes occurs among pieces of data collected in a controller-level network due to abnormal frames, processing loads imposed on a higher-stage PC, etc., and in order to secure the uniqueness of the timing of obtaining pieces of data collected from each controller, information for securing the same timing in the entire system is necessary.

In order to show the uniqueness of a data frame transmitted from each station, "timer value (NET_TIME) (96) of master station" included in a synchronization frame (TC frame) that is broadcast to all slave stations from the master station for each cycle without fail is to be used. In other words, it is sufficient for each slave station to store "timer value (NET_TIME) (96) of master station" in the transmission data frame of itself and to transmit it.

FIG. 14 shows frame format examples of the above synchronization frame (TC frame) and a data frame.

For example the master station transmits a TC frame to all slave stations, and each slave station returns a data frame at the above unique timing of itself.

A TC frame 90 in the depicted example includes H_TYPE 91, SIZE 92, FC 93, S_ADDR 94, R_ADDR 95, NET_TIME 96, F_SEQ 97, STA 98, etc. Note that these can be considered to be data constituents of the frame header.

The H_TYPE 91 represents the frame header type, and SIZE 92 represents the size of the entire frame. FC 93 represents the frame type, and the frame type of a TC frame is stored in FC 93. S_ADDR 94 and R_ADDR 95 represent the transmitting station number and the receiving station number.

F_SEQ 97 is a frame number, and is a serial that is incremented and added regardless of frame types for each frame transmission. This is information to be used together with NET_TIME 96 etc. on the reception side so as to check frame reception omission.

The NET_TIME 96 represents the transmission time of the TC frame 90 for example, and the current value of a timer (not shown) for example is used for this, while the scope of the present invention is not limited to this example. As information for uniquely representing a data collection timing, "timer value" (NET_TIME) is used in the present example, while a counter value (scan sequential number) representing the cycle of the controller-level network or other values may be used. Note that the above timer value is the value of a timer that is included in the transmission source device (for example the master station) of a TC frame.

In the depicted example, a data frame 100 includes H_TYPE 101, SIZE 102, FC 103, S_ADDR 104, R_ADDR 105, NET_TIME 106, F_SEQ 107, STA 108, control data 109, collected data 110, etc.

H_TYPE 101 through STA 108 above may be considered to be substantially similar to H_TYPE 91 through STA 98 above, and the explanations thereof will be omitted. However, in FC 103, the frame type of the data frame is stored.

Here, in the control data 109, data output to each I/O module by the above MC frame for example is stored.

The collected data 110 includes the depicted data 115, which is data (the above "input") collected from each I/O module by the above TF frame, while D_TYPE 111, data portion size (DT_SIZE) 112, NET_TIME 113, self-station number (S_ADDR) 114, etc. are also included in addition to the data 115. Note that D_TYPE 111 is identification information indicating that it is collected data.

Here, NET_TIME 113 is a result of copying NET_TIME 96 of the above TC frame 90. Thereby, the device side (the master station, the server apparatus 2, etc.) that obtained this collected data 110 etc. can determine which of the controller cycles the collected data 110 is related to. Thereby, it is possible to determine the collection timing of each piece of the collected data 110 because of what has been described above.

When the controller cycle is an N multiple (N=2, 3, 4, 5,.., i.e., an integer equal to or greater than two) of the takt cycle, only data closest to the controller cycle start timing can be collected.

Then, each controller (slave station) is provided with an interstage buffer (not shown) for temporarily accumulating pieces of collected data from the above I/O modules, and pieces of collected data for each takt cycle are accumulated in the interstage buffer sequentially. Thereafter, for each controller cycle start timing, all pieces of data accumulated in the interstage buffer are transmitted in a packet to a transmission destination (such as a master station etc.) in the controller-level network and the data accumulated in the interstage buffer is deleted. This is treated as a variation example of example 2.

Here, a master station etc. that has received a packet in an arbitrary control cycle recognizes that the received information is a collected data group etc. in a prescribed period that is immediately before the controller cycle or the like, while it does not recognize which of the takt cycles each piece of data is related to. Accordingly, it is desirable that identification information for identifying the takt cycle to which the data is related be added to each piece of data. This identification information is added when for example data is accumulated in for example the interstage buffer. In this example accordingly, the only operation conducted when a packet is generated/transmitted is storing, in the packet, the data accumulated in the interstage buffer.

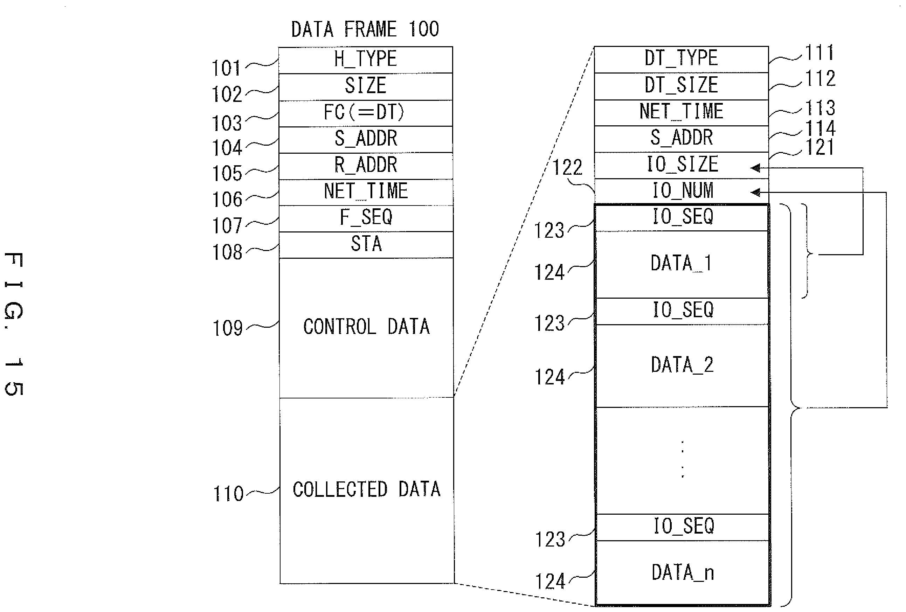

FIG. 15 shows a data structure of the data frame 100 used for the above variation example of example 2.

In FIG. 15, constituents that are substantially similar to those in the structure of the data frame 100 shown in FIG. 14 are denoted by the same numerals, and explanations thereof will be omitted.

In the example shown in FIG. 15, IO_SIZE 121 and number-of-collection (IO_NUM) 122 shown in the collected data 110 are added to the example shown in FIG. 14, and IO_SEQ 123 (identification information) representing the collection cycle on the device level for each of the plurality of pieces of collected data 124 is also added.

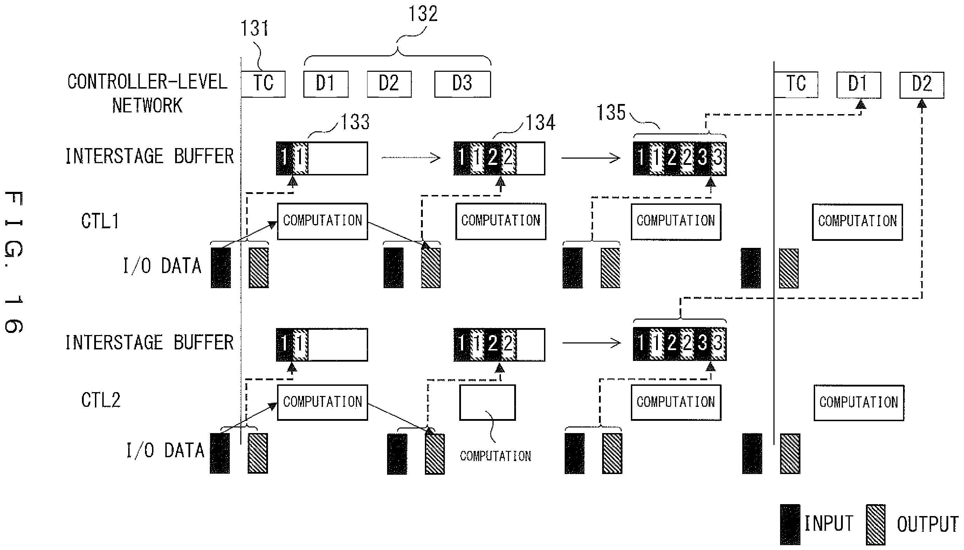

FIG. 16 shows a data collection operation example in the variation example of example 2.

In the example shown in FIG. 16, the length of the controller cycle is three times as long as that of the takt cycle.

Accordingly, the collected data equivalent to three takt cycles is transmitted to a transmission destination in the controller-level network for each controller cycle.

In this example, collected data is stored/accumulated in the interstage buffer every three takt cycle start timings for one controller cycle. For the storing/accumulating, the above identification information (corresponding to IO_SEQ 123) is added to each piece of collected data.

In the example shown in FIG. 16, in the first takt cycle from among the above three takt cycles, the collected data etc. in that cycle is stored in the interstage buffer. For this storing, "1" is added as the above identification information. In this, "1" is added to all pieces of collected data etc. Thereby, the depicted accumulated data 133 is stored in the interstage buffer.

Similarly, in the second takt cycle, the collected data etc. in that cycle is additionally stored in the interstage buffer and "2" is added to the collected data etc. as the above identification information. Thereby, the depicted accumulated data 134 is stored in the interstage buffer.

Similarly, in the third takt cycle, the collected data etc. in the cycle is additionally stored in the interstage buffer and "3" is added to the collected data etc. as the above identification information. Thereby, depicted accumulated data 135 is stored in the interstage buffer.

As described above, identification information is added to collected data in an arbitrary controller cycle and the collected data is stored in the interstage buffer. Then, at a prescribed timing in the next controller cycle (for example, in the case of depicted controller CTL1, the depicted timing of "D1"), all pieces of data accumulated in the interstage buffer are transmitted in a packet to a transmission destination (master station etc.) in the controller-level network. In the above example, the accumulated data 135 is transmitted to a prescribed transmission destination.

On the transmission destination side and on the basis of identification information of the above each piece of data, it is possible to determine which of the timings (first takt cycle, second takt cycle or third takt cycle) in the above controller cycles each data is related to.

According to the above example 2, it is possible to solve the problem explained in FIG. 26. In other words, in all controllers, the timings of input and output of data related to the device-level network can be synchronized. Further, it is also possible to secure the synchronism of each piece of I/O data collected to for example a transmission destination device etc. and to increase the determination accuracy of the temporal sequence. In other words, it is possible to determine highly accurately what piece of data is data collected at the same timing as what piece of data or the temporal sequential relationships between each piece of data and other pieces of data for each piece of data. "Highly accurately" means that it corresponds to the length of the takt cycle (1ms in this example).

Conventionally, pieces of data that were collected from respective controllers in the same controller cycle were not always pieces of data collected at the same timing as explained in FIG. 26. Also, only an accuracy corresponding to the length (5ms in this example) of the controller cycle was able to be attained conventionally. This problem can be solved by example 2.

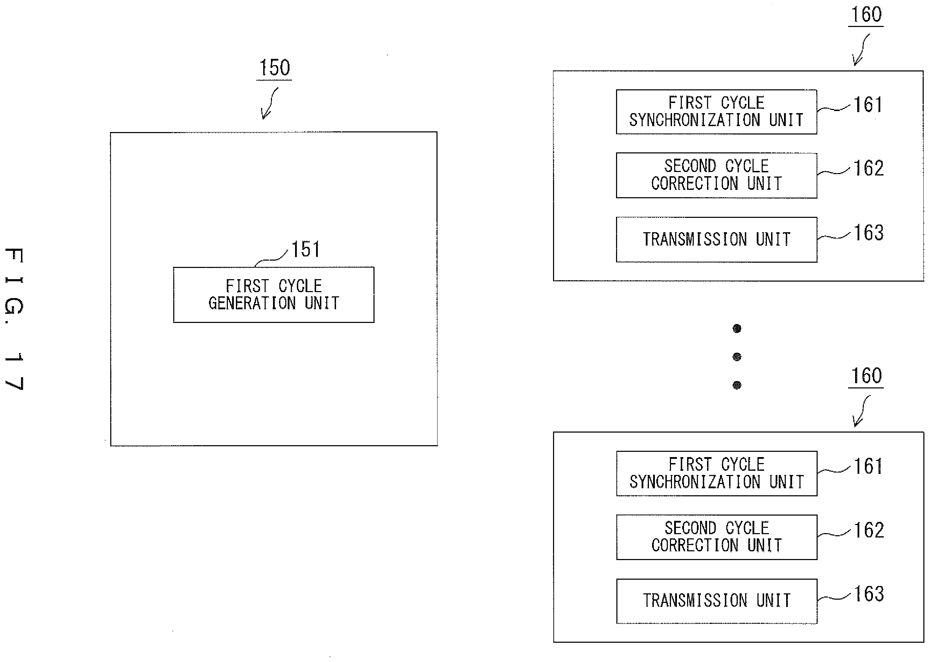

FIG. 17 shows a functional block diagram of a programmable controller system of the present example.

The programmable controller system of the present example basically includes a plurality of control units in which controllers and each input/output target are connected to a second network, the plurality of controllers are connected also to a first network, and each controller conducts an operation of computation/communication in accordance with a first cycle related to the first network and a second cycle related to the second network.

An example of the above first network is the above controller-level network 1, and an example of the above first cycle is the above controller cycle. An example of the second network is the above device-level network 13, and accordingly an example of the above second cycle is the above takt cycle.

The above plurality of controllers are a specific controller 150, respective controllers 160 (referred to as different controllers 160 hereinafter) that are not the specific controller 150, etc. Note that an example of the specific controller 150 is the controller (CPU module etc.) of the above master station. An example of the controllers 160 is the controller of each slave station above.

The specific controller 150 includes a first cycle generation unit 151 that determines the first cycle start timing of itself on the basis of the second cycle start timing of itself.

Each of the above different controllers 160 has a first cycle synchronization unit 161 and a second cycle correction unit 162, etc.

The first cycle synchronization unit 161 synchronizes the above first cycle start timing of itself with the first cycle start timing of the specific controller 150. This is realized as an example by a synchronization process of the controller cycle of each controller in the controller-level network by using the above former application (PCT/JP2013/050121), whereas the scope of the present invention is not limited to this.

The second cycle correction unit 162 corrects the second cycle start timing of itself on the basis of the first cycle start timing of itself. Note that as described above, the first cycle synchronization unit 161 synchronizes the first cycle start timing of itself with the first cycle start timing of the specific controller 150. Further, the first cycle start timing thereof is synchronized by the first cycle generation unit 151 with the second cycle start timing in the specific controller 150. Accordingly, by the correction conducted by the second cycle correction unit 162 above, the second cycle start timings in all the controllers 160 are synchronized with the second cycle start timing in the specific controller 150.

When for example the correction amount of the above second cycle start timing is greater than a prescribed upper limit value, the second cycle correction unit 162 above corrects the above second cycle start timing a plurality of times in a divided manner with reference to a correction value that is equal to or smaller than the upper limit. An example of the above correction amount is shift amount P above, "takt cycle-P", etc. , and an example of the above upper limit is AJUST_UNIT above etc.

The upper limit value is determined for example on the basis of an unoccupied time range other than the respective assigned bands in the second cycle.

Alternatively, for example, the above second cycle includes a TF band that is a band in which the controller 160 etc. collects pieces of data from the respective input/output targets via the second network, an MC band that is a band in which the controller 160 etc. conducts output to the respective input/output targets, and an MSG band that is a band for transmitting and receiving an arbitrary one-to-one message. The above upper limit value is determined on the basis of the unoccupied period after the above MSG band.

Alternatively, for example, the above second cycle includes a TF band that is a band in which the controller 160 etc. collects pieces of data from the respective input/output targets via the second network, an MC band that is a band in which the controller 160 etc. circulates an MC frame including output to the respective input/output targets to the second network, and an MSG band that is a band for transmitting and receiving an arbitrary one-to-one message. The respective input/output targets operate in accordance with the I/O cycle based on the second cycle. The above upper limit value is determined so that the next I/O cycle does not start before the last input/output target to receive the above MC frame receives the MC frame even when the above correction has changed the second cycle start timing by the amount of that correction.

Note that the above method of determining the upper limit value is based on for example the method of determining the value of AJUST_UNIT described above. Thereby, the above I/O cycle corresponds to the takt cycle related to respective I/O modules A, B and C denoted by numeral 223 in for example FIG.24.

Also, the second cycle correction unit 162 determines for example whether the correction direction is set to the negative direction or to the positive direction, and corrects the second cycle start timing by temporarily reducing the length of the second cycle of itself when the correction direction is set to the negative direction. When the correction direction is set to the positive direction, the second cycle correction unit 162 temporarily increases the length of the second cycle of itself so as to correct the second cycle start timing. An example of this process is explained in FIG. 4 (a) and FIG. 4(b), whereas the scope of the present invention is not limited to this example.

Also, when for example the amount of shift from the first cycle start timing to the second cycle start timing immediately after that is smaller than half the length of the second cycle, the second cycle correction unit 162 sets the correction direction to the above negative direction, and when the above shift amount is equal to or greater than half the length of the second cycle, the second cycle correction unit 162 sets the correction direction to the above positive direction. An example of this process is explained in relation to FIG. 3. An example of the above shift amount is shift amount P in the explanation of FIG. 3, whereas the scope of the present invention is not limited to this example.

Also, when for example the second cycle correction unit 162 sets the above correction direction to the above negative direction, it sets the above shift amount as the correction amount for the second cycle, and when it sets the above correction direction to the above positive direction, it sets the "length of second cycle-shift amount" as the correction amount for the second cycle. An example of this process is explained in relation to FIG. 3. An example of the above correction direction is AJUST_VEC in the explanation of FIG. 3 and an example of the correction amount for the second cycle is AJUST_TIME in the explanations of FIG. 3, whereas the scope of the present invention is not limited to this example.

Also, for example, each of the controllers 160 above further includes a transmission unit 163 that transmits, to a prescribed transmission destination device via the first network for each of the above first cycle, the latest collected pieces of data obtained from each input/output target via a second network.

Regarding this, for example, the above transmission destination device transmits a specific packet including the time information of that moment to each controller 160 when each first cycle starts. Then, the transmission unit 163 above of each controller 160 adds the above time information included in the received specific packet to a transmission packet for the above latest collected pieces of data so as to transmit the packet to the above transmission destination device for each first cycle. Note that an example of this process is explained in FIG. 13, FIG. 14 and other figures above.

Also, for example, the above first cycle has a length that is an integral multiple of that of the above second cycle. In particular, it is more than twice the length. In the example of FIG. 3 for example, the controller cycle has a length five times as long as that of the takt cycle.

In the example as described above, for each first cycle above, the transmission unit 163 for example accumulates collected data obtained from each output/output target for each second cycle in the first cycle, together with identification information representing which of the second cycles the collected data was obtained in, and transmits the accumulated data in a lump to the transmission destination device at the end. An example of this process is explained in FIG. 15, FIG. 16, and other figures.

Note that the above transmission destination device is for example the controller 150 (master station etc.), whereas the scope of the present invention is not limited to this example, and the transmission destination device may be the server apparatus 2 etc. for example.

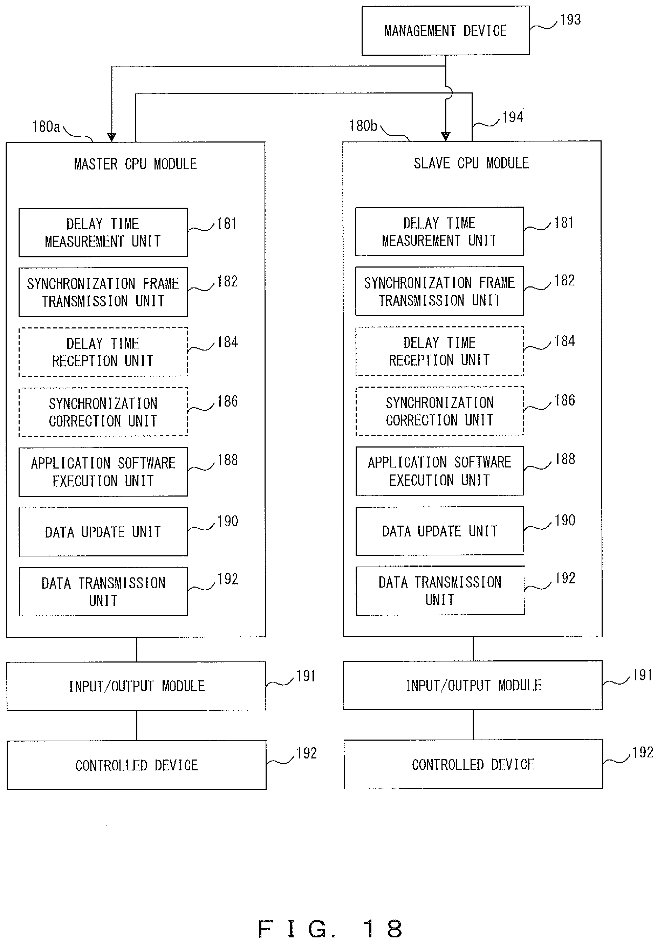

As the final explanation, a synchronization process of the controller cycles of respective controllers in the controller-level network based on the former application (PCT/JP2013/050121) will be described. For this, an example will be explained by referring to FIG. 18, FIG. 19 and FIG. 20.

Note that as an example, the above CPU module 11 can be considered to include some (particularly, the simultaneous correction process) of the functions of the CPU module 180 of the former application, which will be described later below; however, the scope of the present invention is not limited to this example.

FIG. 18 is a functional block diagram for explaining the respective functional units of the CPU module 180 of the former application.

The CPU module 180 includes various types of functional units such as a delay time measurement unit 181, a synchronization frame transmission unit 182, a delay time reception unit 184, a synchronization correction unit 186, an application software execution unit 188, a data update unit 190, a data transmission unit 192, etc.

Whether these functional units operate depends upon whether the programmable controllers operate as the master or a slave. Here, a structural example of a master CPU module 180a, which is the CPU module 180 of a case when its programmable controller operates as the master, is shown on the left side of the figure. Similarly, a structural example of a CPU module 180b, which is the CPU module 180 of a case when its programmable controller operates as a slave, is shown on the right side of the figure. Also, functional units that are not influenced by whether their programmable controllers are the master or slaves are denoted by dashed lines. Note that the present embodiment is not limited to this structure, and the same structure is included so that one CPU module 122 can be the master CPU module 180a and can also be the slave CPU module 180b.

When the CPU module 180 functions as the master CPU module 180a, the delay time measurement unit 181 transmits, to an arbitrary slave CPU module 180b, a transmission delay time request frame that is used for measuring a transmission delay time between the master CPU module 180a and the slave CPU module 180b. This transmission delay time request frame has a format substantially identical to a synchronization frame, and is a frame having different data in a prescribed portion (the command portion for example) in the synchronization frame. This transmission delay time request frame is transmitted in a state that it is synchronized with a reference signal generated in the master CPU module 180a.

Also, when the delay time measurement unit 181 receives a reception completion frame from an arbitrary slave CPU module 180b after transmitting a transmission delay time request frame, the delay time measurement unit 181 obtains the time at which the reception completion frame was received. Then, the delay time measurement unit 181 calculates the round-trip transmission delay time between the master CPU module 180a and an arbitrary slave CPU module 18b from the difference between the time when the transmission delay time request frame was transmitted and the time when the reception completion frame was received. Then, the delay time measurement unit 181 divides the calculated round-trip transmission delay time by two, and transmits, to an arbitrary CPU module 180b, the transmission delay time report frame containing the transmission delay time, which is the division result, in a state in which the frame is synchronized with the next reference signal. Thereby, it is possible to report the transmission delay time based on a network 194 to an arbitrary slave CPU module 180b. Note that the network 194 can be considered to be equivalent to the above controller-level network 1; however, the scope of the present invention is not limited to this.

When the CPU module 180 functions as a master CPU module 122a, the synchronization frame transmission unit 182 transmits, to the plurality of slave CPU modules 180b in synchronization with a reference signal, a synchronization frame that has been prepared in advance. This synchronization frame is a signal for making the counted value of the reference signal generation unit of the slave CPU module 180b correspond to the counted value of the reference signal generation unit of the master CPU module 180a.

When the CPU module 180 functions as the slave CPU module 180b, the delay time reception unit 184 receives a transmission delay time request frame from the master CPU module 180a, and transmits a reception completion frame to the master CPU module 180a in response to that transmission delay time request frame. Also, receiving the transmission delay time report frame from the master CPU module 180a, the delay time reception unit 184 saves the transmission delay time contained in that frame to a RAM 164 etc. Thereby, the slave CPU module 180b can obtain the transmission delay time between the master CPU module 180a and the slave CPU module 180b.

When the CPU module 180 functions as the slave CPU module 180b, the synchronization correction unit 186 advances, by the transmission delay time, the reference signal generated by the reference signal generation unit (not shown) in the slave CPU module 180b.

Specifically, when the synchronization correction unit 186 receives a synchronization frame from the master CPU module 180a, the synchronization correction unit 186 obtains the counted value from the reference signal generation unit so as to calculate a correction amount, which is the difference between the value equivalent to the transmission delay time (time converted value of the reference signal generation unit (not shown)) and the obtained counted value. Next, the synchronization correction unit 186 subtracts the correction amount from the reference value so as to derive a correction reference value, and temporarily sets that correction reference value in the reference signal generation unit as a new reference value. Thus, the correction reference value is expressed by [reference value - ("value equivalent to transmission delay time"- "counted value of reference signal generation unit")].

When, the correction reference value is set and the counting based on that correction reference value has been completed in the reference signal generation unit, the synchronization correction unit 186 promptly sets the original reference value in the reference signal generation unit. Thereby, it is possible to temporarily advance the reference value by the transmission delay time. An example of executing the correction by the transmission delay time at once is shown here, while the scope of the present invention is not limited to this, and the correction may be conducted a plurality of times in a divided manner. Note in the present embodiment that when the synchronization correction unit 186 receives a synchronization frame without obtaining a transmission delay time from the master CPU module 180a, the above correction process may be performed by setting the transmission delay time as zero.

Thereby, in the present embodiment it is possible to highly accurately synchronize the reference signal generation unit (not shown) of the master CPU module 180a and the reference signal generation unit (not shown) of the slave CPU module 180b. Note that the synchronization correction process as described above may be performed continuously or may be performed intermittently for each prescribed period of time.

The application software execution unit 188 executes an execution program in response to a reference signal generated by the reference signal generation unit (by receiving a reference signal as an interrupt signal) and controls the controlled device 192 via an input/output module 191 regardless of whether the application software execution unit 188 is in the master CPU module 180a or the slave CPU module 180b. Accordingly, the execution program is executed cyclically in response to reference signals.

When data (for example status information, a detection result of a sensor, a control result, etc.) is generated, the data update unit 190 updates the contents in the common memory (not shown) in the CPU module 180 of itself by using the generated data regardless of whether the data update unit 190 is in the master CPU module 180a or the slave CPU module 180b.

Also, the data update unit 190 transfers that data to other CPU modules 180. Also, when data is transferred from other CPU modules 180, the data update unit 190 updates the contents in the common memory (not shown) of itself on the basis of that data. Thereby, it is possible to share data with other CPU modules 180. Also, the transmission timing for the data update unit 190 to transmit data to other CPU modules 180 is set in advance for each CPU module 180 on the basis of the reference signal generation unit (not shown).

In both the master CPU module 180a and the slave CPU module 180b, the data transmission unit 192 transmits, to a management device 193, data for which the management device 193 has make a collection request from among data generated by the execution of the execution program by the application software execution unit 188. The transmission timing is based on the transmission timing of the data update unit 190. In the present embodiment, the CPU modules 180 are synchronized, and accordingly pieces of data with the same generation timing etc. are collected to the management device 193.

Note that the management device 193 may be considered to be an example of the above server apparatus 2, whereas this example does limit the scope of the present invention.

### (Synchronization correction process)

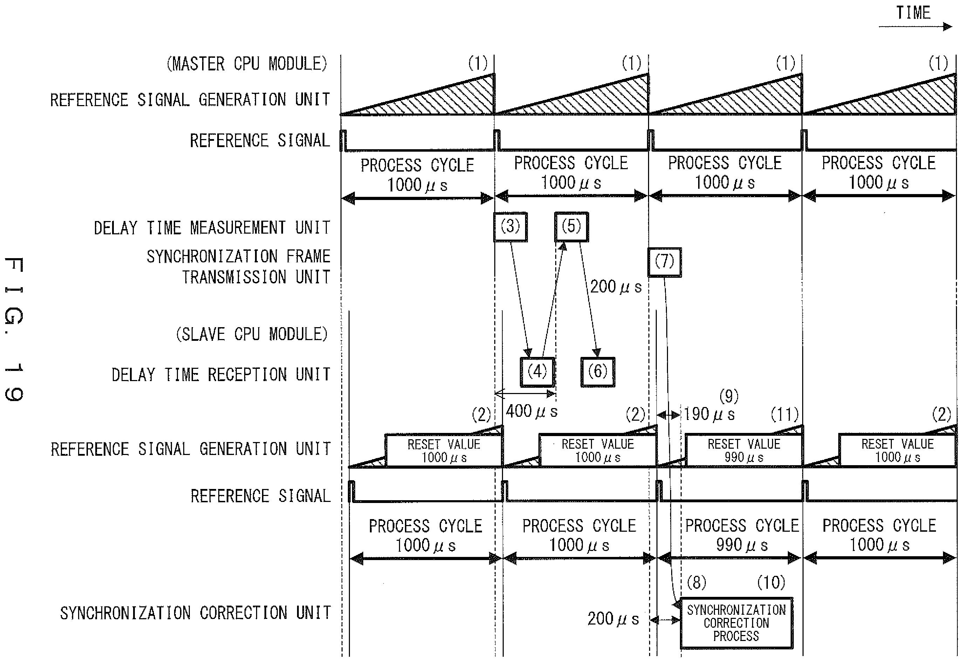

FIG. 19 is a time chart for explaining a synchronization correction process example. Here, it is assumed that the reference signal of the slave CPU module 180b is delayed from the reference signal of the master CPU module 180a by 10µsec. Note that the reference value (process cycle) is assumed to be 1000µsec, whereas the scope of the present invention is not limited to this, and the setting may be changed appropriately for example by a management device 193. Also, in the figure, "psec" appears as "µs" for the sake of simplicity.

In FIG. 19, the reference signal generation unit of the master CPU module 180a conducts the counting. When the counted value has reached the reference value at the "point in time denoted by (1) in FIG. 19" (referred to as "point (1) in time in FIG. 19" hereinafter, and this will apply to the other portions), the reference signal is output in the master CPU module 180a. Then, the application software execution unit 188 executes the execution program in accordance with the reference signal. In FIG. 19, the triangles with hatched lines represent transitions of the counted value, and the counted value increases with the elapse of time so as to be reset when it has reached the counting target (reference value for example).

The reference signal generation unit of the slave CPU module 180b also conducts the counting in parallel to the master CPU module 180a. When the counted value thereof has reached the reference value at the point (2) in time in FIG. 19, the reference signal is output. The application software execution unit 188 executes the execution program in response to the reference signal. As described above, in the master CPU module 180a and the slave CPU module 180b, prescribed processes are executed in response to independent reference signals.

Also, when a synchronization correction process is started in the master CPU module 180a, the delay time measurement unit 181 of the master CPU module 180a transmits a transmission delay time request frame for calculating the transmission delay time ((3) in FIG. 19). Receiving the transmission delay time request frame from the master CPU module 180a, the delay time reception unit 184 of the slave CPU module 180b transmits a reception completion frame to the master CPU module 180a in response to that transmission delay time request frame ((4) in FIG. 19).

Next, receiving the reception completion frame, the delay time measurement unit 181 of the master CPU module 180a calculates the round-trip transmission delay time between the master CPU module 180a and the slave CPU module 180b. Then, the delay time measurement unit 181 transmits, to the slave CPU module 180b, a transmission delay time report frame containing the transmission delay time (200µsec) obtained by dividing the calculated round-trip transmission delay time (400µsec) by two ((5) in FIG. 19) . Receiving the transmission delay time report frame, the delay time reception unit 184 of the slave CPU module 180b saves the above transmission delay time (equivalent value) contained in that frame to a memory/buffer ((6) in FIG. 19).

After starting a synchronization correction process, the synchronization frame transmission unit 182 of the master CPU module 180a transmits a synchronization frame to the slave CPU module 180b as an interrupt signal ((7) in FIG. 19). Thereafter, receiving the synchronization frame at the time point of (8) in FIG. 19 after the one-way transmission delay time (200µsec) of the network 194, the synchronization correction unit 186 obtains the counted value (equivalent to 190µsec) from the reference signal generation unit ((9) in FIG. 19). Then, the synchronization correction unit 186 uses the transmission delay time (200µsec) and the reference value (1000µsec) so as to obtain the correction reference value of 990µsec from [reference value - ("value equivalent to transmission delay time"- "counted value of reference signal generation unit") =1000- (200-190)]. Then, the synchronization correction unit 186 temporarily sets that correction reference value in the reference signal generation unit as a new reference value ((10) in FIG. 19).

Thereafter, the reference signal generation unit restarts because the counted value has reached the temporary correction reference value of 990µsec at the point (11) in time in FIG. 19. Thereby, the reference signal of the slave CPU module 180b is synchronized with the reference signal of the master CPU module 180a.

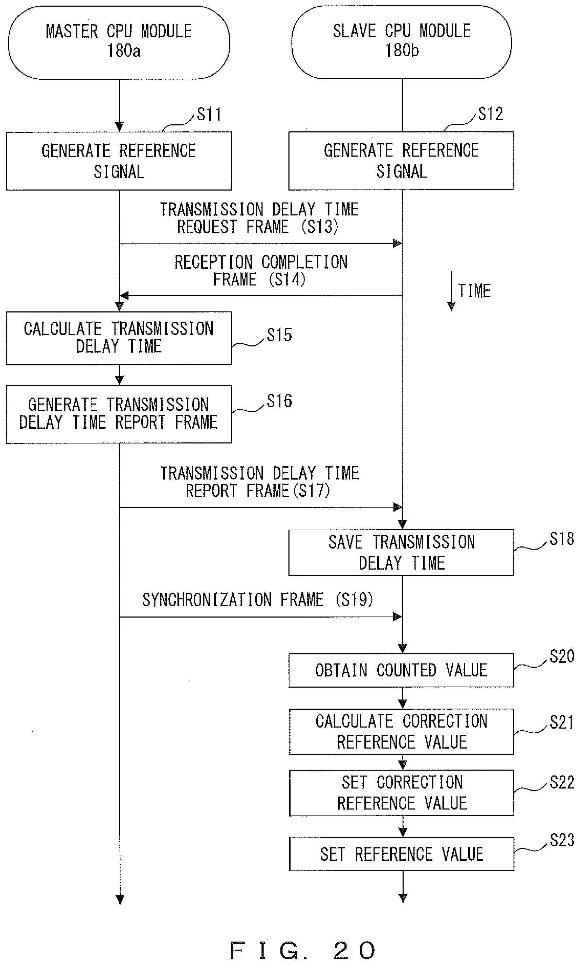

FIG. 20 shows a schematic sequence example of a synchronization correction process. In the example shown in FIG. 20, synchronization using the master CPU module 180a and the slave CPU module 180b is explained for the sake of convenience of explanation, whereas the present embodiment is not limited to this, and it is also possible to synchronize a plurality of slave CPU modules 180b with one CPU module 180a.

In the synchronization correction process in FIG. 20, the reference signal generation unit (not shown) of the master CPU module 180a first generates a reference signal (S11), and the reference signal generation unit (not shown) of the slave CPU module 180b generates a reference signal independently from the master CPU module 180a (S12). This process is performed cyclically.

When the synchronization correction process of the master CPU module 180a is started, the delay time measurement unit 181 of the master CPU module 180a transmits, to the slave CPU module 180b, a transmission delay time request frame for calculating the transmission delay time (S13). Receiving the transmission delay time request frame, the delay time reception unit 184 of the slave CPU module 180b transmits a reception completion frame to the master CPU module 180a.

Receiving the reception completion frame, the delay time measurement unit 181 of the master CPU module 180a calculates for example the transmission delay time (S15), and generates a transmission delay time report frame containing the calculated transmission delay time etc. (S16). Then, the delay time measurement unit 181 transmits the generated transmission delay time report frame to the slave CPU module 180b via the network 194 (S17) . Receiving the transmission delay time frame, the delay time reception unit 184 of the slave CPU module 180b saves the transmission delay time (converted value) contained in that transmission delay time report frame to a memory/buffer (S18) .

Then, the synchronization frame transmission unit 182 of the master CPU module 180a conducts synchronization with a reference signal, and transmits the synchronization frame to the slave CPU module 180b as an interrupt signal.

When the slave CPU module 180b receives the synchronization frame, the synchronization correction unit 186 obtains the counted value from the reference signal generation unit (not shown) (S20). Then, the synchronization correction unit 186 uses the transmission delay time as the reference value so as to calculate [reference value - ("value equivalent to transmission delay time" - "counted value of reference signal generation unit")], and thereby obtains the correction reference value (S21). Then, that correction reference value is temporarily set in the reference signal generation unit as a new reference value (S22). Also, when the correction reference value is set and the counting has been completed with that correction reference value, the synchronization correction unit 186 promptly sets the original reference value in the reference signal generation unit (S23).

The above synchronization correction process is executed for all slave CPU modules 180b included in the control system. Thereby, the reference signal of the slave CPU module 180b is synchronized with the reference signal of the master CPU module 180a. In other words, it is possible to synchronize the execution programs (application software) operating in the respective CPU modules 180.

As described above, according to example 2 or a variation example thereof, it is possible to obtain/manage collected data via a device-level network for each configuration in a multi-configuration system having a plurality of programmable controllers in a manner such that the temporal sequence in the entire system (the collection timings, i.e., which piece of data is earlier or later than which piece of data) can be recognized. This is obtained from the control of each configuration via a controller-level network by for example a higher-stage device etc. Thereby, system parameter tuning and failure diagnosis are possible with a higher accuracy than those conducted by existing systems.

Note that while the above device-level network is for example a ring-shaped network, the scope of the present invention is not limited to this example. While the controller-level network is for example a network having a conventional timer synchronization function, the scope of the present invention is not limited to this example.

## Claims

1. A programmable controller system that includes a plurality of control units (10) each provided with one controller (11) and a plurality of input/output targets (12), the one controller (11) and the plurality of input/output targets (12) of each control unit (10) being connected to a respective one of second networks (13), each of the controllers (11) being connected also to a first network (1), each controller (11) being configured to conduct an operation of computation and communication in accordance with a first cycle related to the first network (1) and a respective second cycle related to the respective second network (13), wherein
a specific controller (11, 150) among the plurality of controllers (11) includes a first cycle generation unit (151) configured to determine a first cycle start timing of itself on the basis of a second cycle start timing of itself, and
each of the controllers (11, 160) other than the specific controller (11, 150) includes:
a first cycle synchronization unit (161) confgured to synchronize the first cycle start timing of itself with a first cycle start timing of the specific controller (11, 150); and
a second cycle correction unit (162) configured to correct the second cycle start timing of itself on the basis of the first cycle start timing of itself.

2. The programmable controller system according to claim 1, wherein
by the correction conducted by the second cycle correction unit (162), the second cycle start timing in each of the controllers (11, 160) other than the specific controller (11, 150) is synchronized with the second cycle start timing of the specific controller (11, 150).

3. The programmable controller system according to claim 2, wherein
when a correction amount of the second cycle start timing is greater than a prescribed upper limit value, the second cycle correction unit (162) is configured to correct the second cycle start timing a plurality of times in a divided manner on the basis of a correction value equal to or smaller than the upper limit value.

4. The programmable controller system according to claim 3, wherein
the upper value is determined on the basis of an unoccupied time range other than respective bands assigned in advance in the second cycle.

5. The programmable controller system according to claim 4, wherein
the second cycle includes a TF band that is a band in which the controller (11) is configured to collect pieces of data from each of the input/output targets (12) via the second network (13), an MC band that is a band in which the controller (11) is configured to output information to each of the input/output targets (12), and an MSG band that is an arbitrary one-to-one message transmission reception band, and the upper limit value is determined on the basis of an unoccupied time after the MSG band.

6. The programmable controller system according to claim 4, wherein
the second cycle includes a TF band that is a band in which the controller (11) is configured to collect pieces of data from each of the input/output targets (12) via the second network (13), an MC band that is a band in which the controller (11) is configured to circulate an MC frame containing an output to each of the input/output targets (12), and an MSG band that is an arbitrary one-to-one message transmission reception band,
each of the input/output targets (12) is configured to operate in accordance with an I/O cycle based on the second cycle, and
the upper limit value is determined so that even when the correction has changed the start timing of the second cycle by the correction value, a next I/O cycle does not start before the input/output target (12) that is the last to receive the MC frame receives the MC frame.

7. The programmable controller system according to one of claims 1 through 6, wherein
the second cycle correction unit (162) is configured to determine whether to set a correction direction to a negative direction or to a positive direction, and to correct the second cycle start timing by temporarily making shorter the second cycle of the second cycle correction unit when the correction direction is set to a negative direction, and to correct the second cycle start timing by temporarily making longer the second cycle of the second cycle correction unit when the correction direction is set to a positive direction.

8. The programmable controller system according to claim 7, wherein
the second cycle correction unit (162) is configured to set the correction direction to the negative direction when a shift amount from a first cycle start timing of itself to a second cycle start timing, which is immediately after the first cycle start timing, is smaller than half the length of the second cycle, and to set the correction direction to the positive direction when the shift amount is equal to or longer than half the length of the second cycle.

9. The programmable controller system according to claim 8, wherein
the second cycle correction unit (162) is configured to set the shift amount to a correction amount of the second cycle when the correction direction is set to the negative direction, and to set a length of the second cycle with a shift amount subtracted therefrom to the correction amount of the second cycle when the correction direction is set to the positive direction.

10. The programmable controller system according to one of claims 1 through 6, wherein
each of the controllers (11) further includes a transmission unit configured to transmit a latest collected data obtained via the second network (13) from each of the input/output targets (12), to a prescribed transmission destination device via the first network (1) for each of the first cycles.

11. The programmable controller system according to claim 10, wherein
each of the controllers (11) is configured to receive, when each first cycle starts, a specific packet transmitted from the transmission destination device and containing time information of that moment, and
the transmission unit of each of the controllers (11) is configured to add the time information of the received specific packet to a transmission packet of the latest collected data, and to transmit the transmission packet to the transmission destination device, for each of first cycle.

12. The programmable controller system according to claim 10, wherein
the first cycle has a length that is an integral multiple of the second cycle, the transmission unit is configured to accumulate, for each of the first cycles, collected data obtained from each of the input/output targets (12) for each second cycle in the first cycle together with identification information representing which of the second cycles the collected data was obtained in, and to transmit the accumulated data to the transmission destination device in a lump at the end.

## Patentansprüche

1. Programmierbares Steuerungssystem, das mehrere Steuereinheiten (10) umfasst, die jeweils mit einer Steuerung (11) und mehreren Ein-/Ausgangszielen (12) versehen sind, wobei die eine Steuerung (11) und die mehreren Ein-/Ausgangsziele (12) jeder Steuereinheit (10) mit einem entsprechenden von zweiten Netzwerken (13) verbunden sind, jede der Steuereinheiten (11) zudem mit einem ersten Netzwerk (1) verbunden ist und jede Steuereinheit (11) konfiguriert ist, einen Berechnungs- und Kommunikationsvorgang gemäß einem ersten Zyklus in Bezug auf das erste Netzwerk (1) und einem entsprechenden zweiten Zyklus in Bezug auf das entsprechende zweite Netzwerk (13) durchzuführen, wobei
eine spezifische Steuerung (11, 150) unter den mehreren Steuerungen (11) eine Erster-Zyklus-Erzeugungseinheit (151) umfasst, die konfiguriert ist, eine Erster-Zyklus-Startzeit von sich selbst auf der Basis einer Zweiter-Zyklus-Startzeit von sich selbst zu bestimmen, und
jede andere der Steuerungen (11, 160) als die spezifische Steuerung (11, 150) umfasst:
eine Erster-Zyklus-Synchronisationseinheit (161), die konfiguriert ist, die Erster-Zyklus-Startzeit von sich selbst mit einer Erster-Zyklus-Startzeit der spezifischen Steuerung (11, 150) zu synchronisieren; und
eine Zweiter-Zyklus-Korrektureinheit (162), die konfiguriert ist, die Zweiter-Zyklus-Startzeit von sich selbst auf der Basis der Erster-Zyklus-Startzeit von sich selbst zu korrigieren.

2. Programmierbares Steuerungssystem nach Anspruch 1, wobei
durch die von der Zweiter-Zyklus-Korrektureinheit (162) durchgeführte Korrektur die Zweiter-Zyklus-Startzeit in jeder anderen der Steuerungen (11, 160) als die spezifische Steuerung (11, 150) mit der Zweiter-Zyklus-Startzeit der spezifischen Steuerung (11, 150) synchronisiert wird.

3. Programmierbares Steuerungssystem nach Anspruch 2, wobei
wenn ein Korrekturbetrag der Zweiter-Zyklus-Startzeit größer ist als ein vorgeschriebener oberer Grenzwert, die Zweiter-Zyklus-Korrektureinheit (162) konfiguriert ist, die Zweiter-Zyklus-Startzeit mehrere Male in einer aufgeteilten Weise auf der Basis eines Korrekturwerts, der gleich oder kleiner als der obere Grenzwert ist, zu korrigieren.

4. Programmierbares Steuerungssystem nach Anspruch 3, wobei
der obere Wert auf der Basis eines anderen unbelegten Zeitbereichs als entsprechende Bänder, die im Voraus in dem zweiten Zyklus zugewiesen werden, bestimmt wird.

5. Programmierbares Steuerungssystem nach Anspruch 4, wobei
der zweite Zyklus ein TF-Band, das ein Band ist, in dem die Steuerung (11) konfiguriert ist, Datenteile von jedem der Ein-/Ausgangsziele (12) über das zweite Netzwerk (13) zu erfassen, ein MC-Band, das ein Band ist, in dem die Steuerung (11) konfiguriert ist, Informationen an jedes der Ein-/Ausgangsziele (12) auszugeben, und ein MSG-Band, das ein beliebiges Einszu-Eins-Nachrichtenübertragungsempfangsband ist, umfasst und der obere Grenzwert auf der Basis einer unbelegten Zeit nach dem MSG-Band bestimmt wird.

6. Programmierbares Steuerungssystem nach Anspruch 4, wobei
der zweite Zyklus ein TF-Band, das ein Band ist, in dem die Steuerung (11) konfiguriert ist, Datenteile von jedem der Ein-/Ausgangsziele (12) über das zweite Netzwerk (13) zu erfassen, ein MC-Band, das ein Band ist, in dem die Steuerung (11) konfiguriert ist, einen MC-Rahmen, der einen Ausgang enthält, an jedes der Ein-/Ausgangsziele (12) in Umlauf zu setzen, und ein MSG-Band, das ein beliebiges Eins-zu-Eins-Nachrichtenübertragungsempfangsband ist, umfasst,
jedes der Ein-/Ausgangsziele (12) konfiguriert ist, gemäß einem E/A-Zyklus basierend auf dem zweiten Zyklus zu arbeiten, und
der obere Grenzwert derart bestimmt wird, dass ein nächster E/A-Zyklus nicht beginnt, bevor das Ein-/Ausgangsziel (12), das als letztes den MC-Rahmen empfangen soll, den MC-Rahmen empfängt, selbst wenn die Korrektur die Startzeit des zweiten Zyklus um den Korrekturwert geändert hat.

7. Programmierbares Steuerungssystem nach einem der Ansprüche 1 bis 6, wobei
die Zweiter-Zyklus-Korrektureinheit (162) konfiguriert ist, zu bestimmen, ob eine Korrekturrichtung auf eine negative Richtung oder eine positive Richtung einzustellen ist, und die Zweiter-Zyklus-Startzeit zu korrigieren, indem der zweite Zyklus der Zweiter-Zyklus-Korrektureinheit temporär kürzer gemacht wird, wenn die Korrekturrichtung auf eine negative Richtung eingestellt wird, und die Zweiter-Zyklus-Startzeit zu korrigieren, indem der zweite Zyklus der Zweiter-Zyklus-Korrektureinheit temporär länger gemacht wird, wenn die Korrekturrichtung auf eine positive Richtung eingestellt wird.

8. Programmierbares Steuerungssystem nach Anspruch 7, wobei
die Zweiter-Zyklus-Korrektureinheit (162) konfiguriert ist, die Korrekturrichtung auf die negative Richtung einzustellen, wenn ein Verschiebungsbetrag von einer Erster-Zyklus-Startzeit von sich selbst zu einer Zweiter-Zyklus-Startzeit, die sich unmittelbar nach der Erster-Zyklus-Startzeit befindet, kleiner als die Hälfte der Länge des zweiten Zyklus ist, und die Korrekturrichtung auf die positive Richtung einzustellen, wenn der Verschiebungsbetrag gleich oder länger als die Hälfte der Länge des zweiten Zyklus ist.

9. Programmierbares Steuerungssystem nach Anspruch 8, wobei
die Zweiter-Zyklus-Korrektureinheit (162) konfiguriert ist, den Verschiebungsbetrag auf einen Korrekturbetrag des zweiten Zyklus einzustellen, wenn die Korrekturrichtung auf die negative Richtung eingestellt wird, und eine Länge des zweiten Zyklus mit einem davon subtrahierten Verschiebungsbetrag auf den Korrekturbetrag des zweiten Zyklus einzustellen, wenn die Korrekturrichtung auf die positive Richtung eingestellt wird.

10. Programmierbares Steuerungssystem nach einem der Ansprüche 1 bis 6, wobei
jede der Steuerungen (11) ferner eine Übertragungseinheit umfasst, die konfiguriert ist, neueste erfasste Daten, die von jedem der Ein-/Ausgangsziele (12) über das zweite Netzwerk (13) erhalten wurden, für jeden der ersten Zyklen über das erste Netzwerk (1) an eine vorgegebene Übertragungszielvorrichtung zu übertragen.

11. Programmierbares Steuerungssystem nach Anspruch 10, wobei
jede der Steuerungen (11) konfiguriert ist, beim Start jedes ersten Zyklus ein spezifisches Paket zu empfangen, das von der Übertragungszielvorrichtung übertragen wird und Zeitinformationen dieses Zeitpunkts enthält, und
die Übertragungseinheit von jeder der Steuerungen (11) konfiguriert ist, die Zeitinformationen des empfangenen spezifischen Pakets zu einem Übertragungspaket der zuletzt erfassten Daten hinzuzufügen und das Übertragungspaket für jeden des ersten Zyklus an die Übertragungszielvorrichtung zu übertragen.

12. Programmierbares Steuerungssystem nach Anspruch 10, wobei
der erste Zyklus eine Länge aufweist, die ein ganzzahliges Vielfaches des zweiten Zyklus ist,
die Übertragungseinheit konfiguriert ist, für jeden der ersten Zyklen erfasste Daten, die von jedem der Ein-/Ausgangsziele (12) für jeden zweiten Zyklus in dem ersten Zyklus erhalten wurden, zusammen mit Identifikationsinformationen anzusammeln, die darstellen, in welchem der zweiten Zyklen die erfassten Daten erhalten wurden, und die angesammelten Daten am Ende auf einmal an die Übertragungszielvorrichtung zu übertragen.

## Revendications

1. Système d'automate programmable qui comprend une pluralité d'unités de contrôle (10) dotées chacune d'un contrôleur (11) et d'une pluralité de cibles d'entrée/sortie (12), ce contrôleur (11) et la pluralité des cibles d'entrée/sortie (12) de chaque unité de contrôle (10) étant connectés à un réseau respectif parmi des deuxièmes réseaux (13), chacun des contrôleurs (11) étant également connecté à un premier réseau (1), chaque contrôleur (11) étant configuré pour réaliser une opération de calcul et de communication en fonction d'un premier cycle relatif au premier réseau (1) et d'un deuxième cycle respectif relatif au deuxième réseau respectif (13), dans lequel
un contrôleur spécifique (11, 150) parmi la pluralité des contrôleurs (11) comprend une unité de génération de premier cycle (151) configurée pour déterminer un instant de début de premier cycle de lui-même sur la base de l'instant de début d'un deuxième cycle de lui-même, et
chacun des contrôleurs (11, 160) différents du contrôleur spécifique (11, 150) comprend :
une unité de synchronisation de premier cycle (161) configurée pour synchroniser l'instant de début de premier cycle d'elle-même avec un instant de début de premier cycle du contrôleur spécifique (11, 150) ; et
une unité de correction de deuxième cycle (162) configurée pour corriger l'instant de début de deuxième cycle d'elle-même sur la base de l'instant de début de premier cycle d'elle-même.

2. Système d'automate programmable selon la revendication 1, dans lequel
grâce à la correction réalisée par l'unité de correction de deuxième cycle (162), l'instant de début de deuxième cycle de chacun des contrôleurs (11, 160) différents du contrôleur spécifique (11, 150) est synchronisé avec l'instant de début de deuxième cycle du contrôleur spécifique (11, 150).

3. Système d'automate programmable selon la revendication 2, dans lequel
lorsqu'une quantité de correction de l'instant de début de deuxième cycle est supérieure à une valeur limite supérieure prescrite, l'unité de correction de deuxième cycle (162) est configurée pour corriger l'instant de début de deuxième cycle plusieurs fois de manière partagée sur la base d'une valeur de correction inférieure ou égale à la valeur limite supérieure.

4. Système d'automate programmable selon la revendication 3, dans lequel
la valeur supérieure est déterminée sur la base d'une plage temporelle inoccupée différente de bandes respectives affectées à l'avance dans le deuxième cycle.

5. Système d'automate programmable selon la revendication 4, dans lequel
le deuxième cycle comprend une bande TF qui est une bande où le contrôleur (11) est configuré pour collecter des éléments de données de chacune des cibles d'entrée/sortie (12) via le deuxième réseau (13), et une bande MC qui est une bande où le contrôleur (11) est configuré pour faire sortir de l'information à l'attention de chacune des cibles d'entrée/sortie (12), et une bande MSG qui est une bande de réception de transmission de message de personne à personne arbitraire, et la valeur limite supérieure est déterminée sur la base d'un temps inoccupé après la bande MSG.

6. Système d'automate programmable selon la revendication 4, dans lequel
le deuxième cycle comprend une bande TF qui est une bande où le contrôleur (11) est configuré pour collecter des éléments de données de chacune des cibles d'entrée/sortie (12) via le deuxième réseau (13), une bande MC qui est une bande où le contrôleur (11) est configuré pour faire circuler une trame MC comprenant une sortie pour chacune des cibles d'entrée/sortie (12), et une bande MSG qui est une bande de réception de transmission de message de personne à personne arbitraire,
chacune des cibles d'entrée/sortie (12) est configurée pour fonctionner selon un cycle E/S sur la base du deuxième cycle, et
la valeur limite supérieure est déterminée de sorte que, même lorsque la correction a changé l'instant de début du deuxième cycle de l'ordre de la valeur de correction, un cycle d'E/S suivant ne débute pas avant que la cible d'entrée/sortie (12) qui est la dernière à recevoir la trame MC reçoit la trame MC.

7. Système d'automate programmable selon l'une quelconque des revendications 1 à 6, dans lequel
l'unité de correction de deuxième cycle (162) est configurée pour déterminer s'il convient de fixer un sens de correction à un sens négatif ou un sens positif, et pour corriger l'instant de début de deuxième cycle en raccourcissant temporairement le deuxième cycle de l'unité de correction de deuxième cycle lorsque le sens de correction est fixé à un sens négatif, et pour corriger l'instant de début de deuxième cycle en rallongeant temporairement le deuxième cycle de l'unité de correction de deuxième cycle lorsque le sens de correction est fixé à un sens positif.

8. Système d'automate programmable selon la revendication 7, dans lequel
l'unité de correction de deuxième cycle (162) est configurée pour fixer le sens de correction au sens négatif lorsqu'une quantité de décalage d'un instant de début de premier cycle d'elle-même par rapport à un instant de début de deuxième cycle, qui est immédiatement après l'instant de début du premier cycle, est inférieure à la moitié de la longueur du deuxième cycle, et pour fixer le sens de correction au sens positif lorsque la quantité de décalage est égale à la moitié de la longueur, ou plus longue que celle-ci, du deuxième cycle.

9. Système d'automate programmable selon la revendication 8, dans lequel
l'unité de correction de deuxième cycle (162) est configurée pour fixer la quantité de décalage à une quantité de correction du deuxième cycle lorsque le sens de correction est fixé au sens négatif, et pour fixer une longueur du deuxième cycle, dont une quantité de décalage a été soustraite, à la quantité de correction du deuxième cycle lorsque le sens de correction est fixé au sens positif.

10. Système d'automate programmable selon l'une des revendications 1 à 6, dans lequel
chacun des contrôleurs (11) comprend en outre une unité de transmission configurée pour transmettre une donnée collectée en dernier, obtenue via le deuxième réseau (13) de chacune des cibles d'entrée/sortie (12), à un dispositif de destination de transmission prescrit via le premier réseau (1) pour chacun des premiers cycles.

11. Système d'automate programmable selon la revendication 10, dans lequel
chacun des contrôleurs (11) est configuré pour recevoir, lorsque chaque premier cycle débute, un paquet spécifique transmis par le dispositif de destination de transmission et contenant de l'information de temps de ce moment, et
l'unité de transmission de chacun des contrôleurs (11) est configurée pour ajouter l'information de temps du paquet spécifique reçu à un paquet de transmission de la donnée collectée en dernier, et pour transmettre le paquet de transmission au dispositif de destination de transmission pour chaque premier cycle.

12. Système d'automate programmable selon la revendication 10, dans lequel
le premier cycle a une longueur qui est un multiple entier du deuxième cycle,
l'unité de transmission est configurée pour accumuler, pour chacun des premiers cycles, des données collectées obtenues de chacune des cibles d'entrée/sortie (12) pour chaque deuxième cycle dans le premier cycle ensemble avec de l'information d'identification représentant celui des deuxièmes cycles dans lequel la donnée collectée a été obtenue, et pour transmettre les données accumulées au dispositif de destination de transmission, en bloc, à la fin.
